(19) Europäisches Patentamt
European Patent Office
Office européen des brevets

(11) **EP 4 746 415 A1**

(12) **EUROPEAN PATENT APPLICATION**
published in accordance with Art. 153(4) EPC

(43) Date of publication:
**20.05.2026 Bulletin 2026/21**

(21) Application number: **24838890.2**

(22) Date of filing: **12.07.2024**

(51) International Patent Classification (IPC):
*H04N 19/91* (2014.01)

(52) Cooperative Patent Classification (CPC):
**H04N 19/124; H04N 19/176; H04N 19/42;
H04N 19/44; H04N 19/91**

(86) International application number:
**PCT/CN2024/105166**

(87) International publication number:
**WO 2025/011638 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023 CN 202310856767**

(71) Applicant: Hangzhou Hikvision Digital
Technology Co., Ltd.
Hangzhou, Zhejiang 310051 (CN)

(72) Inventors:
• **PENG, Bo**
Hangzhou, Zhejiang 310051 (CN)
• **LIN, Chen**
Hangzhou, Zhejiang 310051 (CN)
• **LI, Zheyang**
Hangzhou, Zhejiang 310051 (CN)
• **TAN, Wenming**
Hangzhou, Zhejiang 310051 (CN)

(74) Representative: **Murgitroyd & Company
165-169 Scotland Street
Glasgow G5 8PL (GB)**

(54) **DECODING METHOD AND APPARATUS, AND DEVICE**

(57) Provided in the present disclosure are a decoding method and apparatus, and a device. The method comprises: decoding a code stream corresponding to the current image block, so as to obtain a target feature corresponding to the current image block; determining a first input feature of a target decoding network on the basis of the target feature; acquiring a target feature value quantization bit width and a target feature value quantization hyperparameter of the target decoding network, and converting the first input feature into a second input feature on the basis of the target feature value quantization bit width and the target feature value quantization hyperparameter; processing the second input feature on the basis of an integer weight of the target decoding network, so as to obtain an output feature of the target decoding network, wherein the integer weight is determined on the basis of a target weight quantization bit width and a target weight quantization hyper-parameter; and on the basis of the output feature of the target decoding network, determining a reconstructed image block corresponding to the current image block. By means of the technical solution of the present disclosure, the decoding calculation amount can be reduced on the premise of ensuring the decoding quality.

Decode a target feature corresponding to a current picture block from a bitstream corresponding to the current picture block — 201

Determine an input feature of a target decoding network based on the target feature — 202

Obtain a target feature-value quantization bit width and a target feature-value quantization hyperparameter of the target decoding network, and convert a first input feature into a second input feature based on the target feature-value quantization bit width and the target feature-value quantization hyperparameter — 203

Process the second input feature based on an integer-type weight of the target decoding network to obtain an output feature of the target decoding network; where integer-type weight is determined based on the target weight quantization bit width and the target weight quantization hyperparameter of the target decoding network — 204

Determine a reconstructed picture block corresponding to the current picture block based on the output feature of the target decoding network — 205

FIG. 2

**Description**

**TECHNICAL FIELD**

The present disclosure relates to the field of encoding and decoding technology, particularly to decoding methods and apparatuses, and devices thereof.

**BACKGROUND**

To save space, video pictures are encoded before transmission, and complete video encoding can include processes such as prediction, transform, quantization, entropy encoding, filtering, etc. The prediction process can include intra prediction and inter prediction. Inter prediction utilizes a temporal correlation of a video to predict pixels of a current picture by pixels of an adjacent encoded picture, to remove temporal redundancy in the video. Intra prediction utilizes a spatial correlation of a video to predict a current pixel using pixels of encoded blocks in a current picture, to remove spatial redundancy in the video.

With the rapid development of deep learning, deep learning has achieved success in many high-level computer vision problems, such as picture classification, object detection, etc. Deep learning is also gradually being applied in the field of encoding and decoding, that is, a neural network can be used to encode and decode pictures.

**SUMMARY**

In view of this, the present disclosure provides decoding methods and apparatuses, and devices thereof, to improve decoding performance and reduce decoding complexity.

The present disclosure provides a decoding method including:

decoding a target feature corresponding to a current picture block from a bitstream corresponding to the current picture block;

determining a first input feature of a target decoding network based on the target feature;

obtaining a target feature-value quantization bit width and a target feature-value quantization hyperparameter of the target decoding network, and converting the first input feature of the target decoding network into a second input feature of the target decoding network based on the target feature-value quantization bit width and the target feature-value quantization hyperparameter;

processing the second input feature of the target decoding network based on an integer-type weight of the target decoding network to obtain an output feature of the target decoding network; where the integer-type weight of the target decoding network is determined based on a target weight quantization bit width and a target weight quantization hyperparameter of the target decoding network; and

determining a reconstructed picture block corresponding to the current picture block based on the output feature of the target decoding network.

The present disclosure provides a decoding device, including:

a decoding module module, configured to decode a target feature corresponding to a current picture block from a bitstream corresponding to the current picture block;

a determining module, configured to determine a first input feature of a target decoding network based on the target feature;

a processing module, configured to obtain a target feature-value quantization bit width and a target feature-value quantization hyperparameter of the target decoding network, and convert the first input feature of the target decoding network into a second input feature of the target decoding network based on the target feature-value quantization bit width and the target feature-value quantization hyperparameter; process the second input feature of the target decoding network based on an integer-type weight of the target decoding network to obtain an output feature of the target decoding network; where the integer-type weight of the target decoding network is determined based on a target weight quantization bit width and a target weight quantization hyperparameter of the target decoding network; and

a determining module, configured to determine a reconstructed picture block corresponding to the current picture block based on the output feature of the target decoding network.

The present disclosure provides a decoding device, including: one or more processors and one or more machine-readable storage media, where the one or more machine-readable storage media store machine executable instructions that can be executed by the one or more processors; and

the one or more processors are configured to execute the machine executable instructions to implement the decoding method described above.

The present disclosure provides a machine-readable storage medium, which stores several computer instructions. When the computer instructions are executed by a processor, the decoding method described above is implemented.

From the above technical solutions, it can be seen that in the embodiments of the present disclosure, the target feature corresponding to the current picture block is decoded from the bitstream corresponding to the current picture block. Based on the target feature, the first input feature of the target decoding network is determined. The first input feature is converted into a second input feature based on the target feature-value quantization bit width and the target feature-value quantization hyperparameter. The second input feature is processed based on the integer-type weight of the target decoding network to obtain the output feature of the target decoding network. Based on the output feature, the reconstructed picture block corresponding to the current picture block is determined. Therefore, an end-to-end video image compression method is proposed, which can achieve the decoding of video pictures based on the decoding network and improve encoding and decoding efficiency. A decoding network with fixed-point-type weight(s) is constructed using the target weight quantization bit width(s) and target weight quantization hyperparameter(s). Target feature-value quantization bit width(s) and target feature-value quantization hyperparameter(s) are used to generate fixed-point-type input features, achieving adaptive decoding acceleration and reducing decoding computation while ensuring decoding quality.

**BRIEF DESCRIPTION OF DRAWINGS**

FIG. 1 is a schematic diagram of a three-dimensional feature matrix according to an embodiment of the present disclosure.

FIG. 2 is a flowchart of a decoding method according to an embodiment of the present disclosure.

FIG. 3 is a schematic diagram of a processing procedure of an encoder according to an embodiment of the present disclosure.

FIG. 4 is a schematic diagram of a processing procedure of a decoder according to an embodiment of the present disclosure.

FIGs. 5A and 5B are schematic diagrams of decoding networks according to embodiments of the present disclosure.

FIGs. 6A and 6B are schematic diagrams of decoding networks according to embodiments of the present disclosure.

FIG. 7 is a hardware structure diagram of a decoding device according to an embodiment of the present disclosure.

**DETAILED DESCRIPTION**

The terms used in the embodiments of the present disclosure are only for the purpose of describing specific embodiments and are not intended to limit the present disclosure. As used in the present disclosure and claims, the singular forms "a", "said", and "the" are intended to include the plural forms as well, unless the context clearly indicates otherwise. It should also be understood that the term "and/or" used in the present disclosure refers to any or all possible combinations that include one or more associated listed items. It should be understood that although the terms first, second, third, etc. may be used to describe various information in the embodiments of the present disclosure, such information should not be limited by these terms. These terms are only used to distinguish the same type of information from each other. For example, without departing from the scope of the present disclosure, first information can be referred to as second information; and similarly, second information can also be referred to as first information, according to the context. The word "if" as used herein can be interpreted as "at the time of", "when" or "in response to determining that".

A decoding method is proposed in the embodiments of the present disclosure, which may involve the following technical terms.

JPEG (Joint Photographic Experts Group): JPEG is a standard for compressing continuous tone static pictures, with file suffixes of .jpg or .jpeg, and is a commonly used picture file format. JPEG adopts a joint coding method including predictive coding (such as Differential Pulse Code Modulation, DPCM), discrete cosine transform (DCT), and entropy coding, to remove redundant picture data and color data, which belongs to a lossy compression format, and can compress pictures in a small storage space, causing damage to picture data to a certain extent. Especially when using too high a compression ratio, the quality of the restored picture after decompression is reduced. If high-quality pictures are pursued, JPEG should not use too high a compression ratio.

JPEG-AI (Joint Photographic Experts Group Artificial Intelligence): The scope of JPEG-AI is to create learning based image encoding standards that provide a single bitstream, compact compressed domain representation that significantly improves compression efficiency compared to commonly used image encoding standards under the same subjective quality, effectively enhancing performance in image processing and computer vision tasks. JPEG-AI is oriented to a wide range of applications, such as cloud storage, visual management, autonomous vehicle and devices, image acquisition, storage and management, real-time management of visual data, and media distribution. The goal of JPEG-AI is to design an encoding and decoding solution that significantly improves compression efficiency with the same subjective quality, providing effective compression domain processing for machine-learning-based image processing and computer vision tasks. JPEG-AI requires hardware and software friendly encoding and decoding, support for 8-bit and 10-bit depths, and efficient encoding and progressive decoding of images using text and graphics.

Entropy Encoding: entropy encoding refers to the encoding process that follows the principle of entropy without losing any information, where information entropy is the average amount of information (a measure of uncertainty) of the source. Entropy encoding methods can include but are not limited to: Shannon encoding, Huffman encoding, and arithmetic coding.

Neural Network (NN): the neural network refers to an artificial neural network. The neural network is an operational model composed of a large number of interconnected nodes (or neurons). In the neural network, neuron processing units can represent different objects, such as features, letters, concepts, or some meaningful abstract patterns. The types of processing units in neural networks can be divided into three categories: input units, output units, and hidden units. The input units receive signals and data from the outside. The output units realize the output of processing results. The hidden units are located between the input units and the output units and cannot be observed from outside the system. The connection weight between neurons reflects the strength of the connection between units, and the representation and processing of information are reflected in the connection relationships between processing units. The neural network is a non-programmed, brain-like information processing method that essentially obtains a parallel distributed information processing function through the transform and dynamic behavior of the neural network, and imitates the information processing function of the nervous system of the human brain to different degrees and levels. In the field of video processing, a commonly used neural network can include but is not limited to: a Convolutional Neural Network (CNN), a Recurrent Neural Network (RNN), or a Fully Connected Network, etc.

Convolutional Neural Network (CNN): the convolutional neural network is a type of feedforward neural network and is one of the most representative network structures in deep learning technology. The artificial neurons of Convolutional Neural Network can respond to surrounding units within a certain coverage area, and have excellent performance in large-scale image processing. The basic structure of a convolutional neural network consists of two layers, one of which is the feature extraction layer (also referred to as the convolutional layer), and the input of each neuron is connected to a local receptive field of the previous layer and extracts the local features. Once the local features are extracted, a positional relationship between the partial features and other features is also determined. The second layer is the feature mapping layer (also referred to as the activation layer), where each computational layer of the neural network consists of multiple feature maps. Each feature map is a plane, and the weights of all neurons on the plane are equal. The feature mapping structure can use Sigmoid function, ReLU function, Leaky-ReLU function, PReLU function, or GDN (Generalized Divisive Normalization) function, etc. as the activation function for the convolutional network. In addition, since neurons on one mapping surface share a weight, the number of free parameters in the network is reduced.

For example, one of the advantages of the convolutional neural network over image processing algorithms is that it avoids the complex pre-processing process (such as extracting artificial features) of the pictures, and can directly input the original picture for end-to-end learning. One of the advantages of the convolutional neural network compared to ordinary neural networks is that ordinary neural networks adopt a full connection approach, where all neurons from the input layer to the hidden layer are connected, which results in a huge number of parameters, making network training time-consuming or even difficult. The Convolutional neural network can avoid this difficulty through local connections, weight sharing, and other approaches.

For example, convolutional neural networks can be used for large-scale image processing. Convolutional neural networks typically include convolutional layers, pooling layers, fully connected layers, etc. Convolutional neural networks have achieved significant progress in image classification, object detection, semantic segmentation, and other fields.

Deconvolution: the deconvolutional layer, also referred to as transposed convolution layer, works similarly to convolution layer. The main difference is that the deconvolutional layer uses padding to make the output greater than the input (the output and the input can also be kept the same). If the stride is 1, it means that the output size is equal to the input size; If stride is N, it means that the width of the output feature is N times the width of the input feature, and the height of the output feature is N times the height of the input feature.

Model fixed-point conversion/model quantization: model fixed-point conversion, also known as model quantization, is a common neural network acceleration algorithm. By converting floating-point-type parameters and input/output feature values of a model into fixed-bit values, such as 8-bit or 4-bit integers, computational cost, data bandwidth, and storage requirements of the network model can be reduced, which enables network models to run more quickly and efficiently on hardware with limited memory and computational resources. The fixed-point conversion of the model includes fixed-point conversion of the model weights and fixed-point conversion of the feature values. The lower the bit-width for fixed-point conversion, the more obvious the hardware acceleration will be, and the model performance will correspondingly decrease.

Image/picture encoding and decoding: the purpose of image encoding and decoding technology is to encode and compress images to reduce the transmission and storage costs of image data. The encoded and compressed images can be decoded and restored to image content by the decoder. The higher the encoding compression ratio, the lower the transmission and storage consumption, but it also brings great difficulties to image restoration. With the successful performance of artificial intelligence in various fields, artificial intelligence has also been applied to the field of image encoding and decoding to achieve lower compression rates and better image restoration effects.

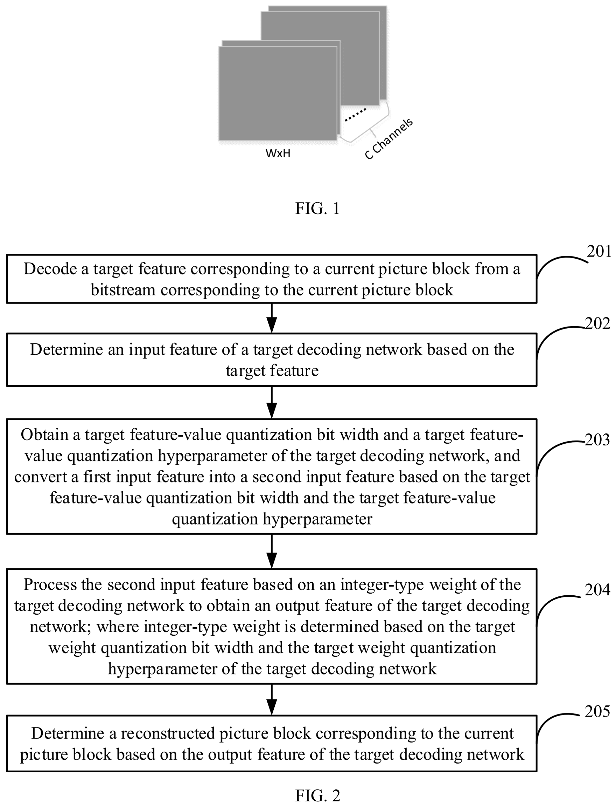

Feature: the feature referred to in the present disclosure is a three-dimensional feature matrix of C * W * H. As shown in FIG. 1, which is a schematic diagram of the three-dimensional feature matrix. In the three-dimensional feature matrix, C represents the number of channels, H represents the feature height, and W represents the feature width. The three-dimensional feature matrix can be the input or output of a neural network.

Rate-Distortion Optimized: there are two major indicators for evaluating encoding efficiency, code rate and Peak Signal to Noise Ratio (PSNR). The smaller the bitstream, the higher the compression rate. The higher the PSNR, and the better the quality of the reconstructed picture. In mode selection, the discrimination formula is essentially a comprehensive evaluation of the both. For example, the cost corresponding to a mode: $J(mode)=D+\lambda * R$, where D represents distortion, which can usually be measured using the SSE index. SSE refers to the mean square sum of the differences between the reconstructed picture block and the source picture. To realize cost consideration, the SAD index can also be used, where the SAD refers to the sum of the absolute differences between the reconstructed picture block and the source picture. $\lambda$ represents the Lagrange multiplier, and R represents the actual number of bits required for picture block encoding in this mode, including the total number of bits required for encoding mode information, motion information, and residuals, etc. When selecting modes, using the Rate-Distortion Optimized to compare and make decisions on encoding modes can usually ensure the best encoding performance.

In related arts, although encoding and decoding methods based on neural networks have shown great performance potential, the encoding and decoding methods based on neural networks still suffer from issues such as poor decoding performance, and high complexity.

There are many encoding tools proposed for each module of the encoder, and each tool usually has multiple modes. For different video sequences, the encoding tools that can achieve optimal encoding performance are often different. Therefore, in the encoding process, Rate-Distortion Optimize (RDO) is usually used to compare the encoding performance of different tools or modes to select the best mode. After determining the optimal tool or mode, the decision information of the tool or mode is transmitted by encoding flag information in the bitstream. This approach can adaptively select the optimal mode combination for different contents and achieve the best encoding performance. The decoder can obtain relevant mode information by directly parsing the flag information, with minimal complexity.

The following provides a detailed explanation of the decoding method in the embodiments of the present disclosure, based on several embodiments.

Embodiment 1: a decoding method is proposed in the embodiments of the present disclosure, as shown in FIG. 2, which may include steps 201 to 205.

In step 201, a target feature corresponding to a current picture block is decoded from a bitstream corresponding to the current picture block.

In step 202, an input feature of a target decoding network is determined based on the target feature.

In step 203, a target feature-value quantization bit width and a target feature-value quantization hyperparameter of the target decoding network are obtained, and a first input feature is converted into a second input feature based on the target feature-value quantization bit width and the target feature-value quantization hyperparameter.

In step 204, the second input feature is processed based on an integer-type weight of the target decoding network to obtain an output feature of the target decoding network; where integer-type weight is determined based on the target weight quantization bit width and the target weight quantization hyperparameter of the target decoding network.

In step 205: a reconstructed picture block corresponding to the current picture block is determined based on the output feature of the target decoding network.

For example, the target decoding network includes at least one target network layer, which may be a network layer using an integer-type weight. For each target network layer in the target decoding network, the first input feature of the target network layer is converted into a second input feature based on the target feature-value quantization bit width and target feature-value quantization hyperparameter of the target network layer, and the second input feature is processed based on the integer-type weight of the target network layer to obtain the output feature of the target network layer; where the integer-type weight of the target network layer is determined based on the target weight quantization bit width of the target network layer and the target weight quantization hyperparameter of the target network layer; where target feature-value quantization bit widths in different target network layers are same or different, target feature-value quantization hyperparameters in different target network layers are same or different, target weight quantization bit widths in different target network layers share a fixed bit width, target weight quantization hyperparameters in different target network layers are same or different.

For example, converting the first input feature of the target network layer into the second input feature of the target network layer based on the target feature-value quantization bit width and the target feature-value quantization hyperparameter of the target network layer includes: converting the first input feature of the target network layer into the second input feature of the target network layer through a following formula: $quant = clip(round(data \times 2^{param}), -2^{bw-1}, 2^{bw-1} - 1)$ ; or $quant = clip(round(data \div param), -2^{bw-1}, 2^{bw-1} - 1)$; where $quant$ represents the second input feature of the target network layer, $data$ represents the first input feature of the target network layer, $param$ represents the target feature-value quantization hyperparameter in the target network layer, $bw$ represents the target feature-value quantization bit width of the target network layer, $clip$ represents a clipping function, $round$ represents a rounding operation.

Where through the operation of the clipping function $clip$, if $round(data \times 2^{param})$ is less than $-2^{bw-1}$, then $quant$ is $-2^{bw-1}$, if $round(data \times 2^{param})$ is greater than $2^{bw-1} - 1$, then $quant$ is $2^{bw-1} - 1$, and if $round(data \times 2^{param})$ is between $-2^{bw-1}$ and $2^{bw-1} - 1$, then $quant$ is $round(data \times 2^{param})$.

Where through the operation of the clipping function $clip$, if $round(data \div param)$ is less than $-2^{bw-1}$, then $quant$ is $-2^{bw-1}$, if $round(data \div param)$ is greater than $2^{bw-1} - 1$, then $quant$ is $2^{bw-1} - 1$, and if $round(data \div param)$ is between $-2^{bw-1}$ and $2^{bw-1} - 1$, then $quant$ is $round(data \div param)$.

In the subsequent embodiments, the definition of the $clip$ operation is similar and will not be repeated in the subsequent process.

For example, a sample decoding network includes a plurality of network layers using floating-point-type weights, where the plurality of network layers include at least one target network layer of the sample decoding network, and the method further includes: for each of the at least one target network layer of the sample decoding network: obtaining a weight quantization hyperparameter candidate list corresponding to the target network layer, where the weight quantization hyperparameter candidate list includes a plurality of candidate weight quantization hyperparameters; for each of the plurality of candidate weight quantization hyperparameters, performing simulated quantization on the floating-point-type weight of the target network layer by a fixed quantization bit width and the candidate weight quantization hyperparameter, to obtain a candidate simulated weight; processing a floating-point-type input feature of the target network layer based on the candidate simulated weight, to obtain a floating-point-type output feature of the target network layer, determining a quantization error corresponding to the candidate weight quantization hyperparameter based on the floating-point-type output feature of the target network layer; based on the quantization error corresponding to each of the plurality of candidate weight quantization hyperparameters, determining a candidate weight quantization hyperparameter corresponding to a minimum quantization error as a target weight quantization hyperparameter of the target network layer, and determining the fixed quantization bit width as a target weight quantization bit width of the target network layer; performing fixed-point quantization on the floating-point-type weight of the target network layer based on the target weight quantization bit width and the target weight quantization hyperparameter of the target network layer, to obtain an integer-type weight of the target network layer; and generating the target decoding network based on the integer-type weight of each of the plurality of target network layers in the sample decoding network.

For example, obtaining the weight quantization hyperparameter candidate list corresponding to the target network layer includes: determining a maximum weight value based on all floating-point-type weights of the target network layer; where each of the all floating-point-type weights includes a plurality of weight values, and the maximum weight value is a maximum value in all weight values of the all floating-point-type weights; generating an initial weight quantization hyperparameter corresponding to the target network layer based on the maximum weight value; and constructing the weight quantization hyperparameter candidate list based on the initial weight quantization hyperparameter.

For example, generating the initial weight quantization hyperparameter corresponding to the target network layer based on the maximum weight value includes: generating the initial weight quantization hyperparameter through a following formula: $param = bw - 1 - ceil(log2(max))$; or $param = (max)/2^{bw-1}$; where param represents the initial weight quantization hyperparameter corresponding to the target network layer, bw represents the fixed quantization bit width, max represents the maximum weight value, and ceil represents a rounding up operation.

For example, performing simulated quantization on the floating-point-type weight of the target network layer by the fixed quantization bit width and the candidate weight quantization hyperparameter, to obtain the candidate simulated weight includes: performing simulated quantization on the floating-point-type weight of the target network layer to obtain the candidate simulated weight, by a following formula: $quant = 2^{-param} \times clip(round(data \times 2^{param}), -2^{bw-1}, 2^{bw-1} - 1)$ ; or $quant = param \times clip(round(data \div param), -2^{bw-1}, 2^{bw-1} - 1)$; where $quant$ represents the candidate simulated weight, $param$ represents the candidate weight quantization hyperparameter, $data$ represents the floating-point-type weight of the target network layer, $bw$ represents the fixed quantization bit width, $clip$ represents a clipping function, $round$ represents a rounding operation.

For example, determining the quantization error corresponding to the candidate weight quantization hyperparameter based on the floating-point-type output feature of the target network layer includes: determining a sample output feature based on the floating-point-type output feature of the target network layer, where the sample output feature is an output feature of a reference network layer in the sample decoding network, and the reference network layer is any one network layer located after the target network layer; determining the quantization error corresponding to the candidate weight quantization hyperparameter based on the sample output feature and a reference output feature; where obtaining the reference output feature includes: decoding a sample feature from a sample bitstream, determining a floating-point-type input feature corresponding to the sample decoding network based on the sample feature, and determining the reference output feature based on the floating-point-type input feature, where the reference output feature is an output feature of the reference network layer in the sample decoding network.

For example, a sample decoding network includes a plurality of network layers using floating-point-type weights, where the plurality of network layers include at least one target network layer, and the method further includes: for each of the at least one target network layer: obtaining a feature-value quantization hyperparameter candidate list and a quantization bit width set corresponding to the target network layer, where the feature-value quantization hyperparameter candidate list includes a plurality of candidate feature-value quantization hyperparameters, and the quantization bit width set includes at least two quantization bit widths; traversing the at least two quantization bit widths from the quantization bit width set, for each of the plurality of candidate feature-value quantization hyperparameters, performing simulated quantization on a floating-point-type input feature of the target network layer by the current quantization bit width and the candidate feature-value quantization hyperparameter, to obtain a candidate input feature; processing the candidate input feature based on a pseudo weight of the target network layer, to obtain a floating-point-type output feature of the target network layer, determining a quantization error corresponding to the candidate feature-value quantization hyperparameter based on the floating-point-type output feature of the target network layer; and based on the quantization error corresponding to each of the plurality of candidate feature-value quantization hyperparameters under a current quantization bit width, in response to determining that a minimum quantization error is less than a preset threshold, determining a candidate feature-value quantization hyperparameter corresponding to the minimum quantization error as the target feature-value quantization hyperparameter of the target network layer, determining the current quantization bit width as the target feature-value quantization bit width of the target network layer, and recording the target feature-value quantization hyperparameter and the target feature-value quantization bit-width for the target network layer.

For example, the decoding method further includes: based on the quantization error corresponding to each of the plurality of candidate feature-value quantization hyperparameters under the current quantization bit width, if the minimum quantization error is greater than or equal to the preset threshold, determining whether the current quantization bit width is a last quantization bit width in the quantization bit width set; and in response to determining that the current quantization bit width is the last quantization bit width in the quantization bit width set, determining the candidate feature-value quantization hyperparameter corresponding to the minimum quantization error as the target feature-value quantization hyperparameter of the target network layer, determining the current quantization bit width as the target feature-value quantization bit width of the target network layer, and recording the target feature-value quantization hyperparameter and the target feature-value quantization bit-width for the target network layer; in response to determining that the current quantization bit width is not the last quantization bit width in the quantization bit width set, determining a next quantization bit width after the current quantization bit width as the new current quantization bit width, and returning to perform simulated quantization on the floating-point input feature of the target network layer by the current quantization bit-width and the candidate feature-value quantization hyperparameter to obtain the candidate input feature.

For example, obtaining the feature-value quantization hyperparameter candidate list corresponding to the target network layer includes: determining a maximum feature value based on all floating-point-type input features of the target network layer; where each of the all floating-point-type input features includes a plurality of feature values, and the maximum feature value is a maximum value in all feature values of the all floating-point-type input features; generating an initial feature-value quantization hyperparameter corresponding to the target network layer based on the maximum feature value; and constructing the feature-value quantization hyperparameter candidate list based on the initial feature-value quantization hyperparameter.

For example, generating the initial feature-value quantization hyperparameter corresponding to the target network layer based on the maximum feature value includes: generating the initial feature-value quantization hyperparameter by a following formula: $param = bw - 1 - ceil(log2(max))$; or $param = (max)/2^{bw-1}$; where param represents the initial feature-value quantization hyperparameter corresponding to the target network layer, bw represents the current quantization bit width, max represents the maximum feature value, and ceil represents a rounding up operation.

For example, performing simulated quantization on the floating-point-type input feature of the target network layer by the current quantization bit width and the candidate feature-value quantization hyperparameter, to obtain the candidate input feature includes: performing simulated quantization on the floating-point-type input feature of the target network layer to obtain the candidate input feature by a following formula: $quant = 2^{-param} \times clip(round(data \times 2^{param}), -2^{bw-1}, 2^{bw-1} - 1)$; or $quant = param \times clip(round(data \div param), -2^{bw-1}, 2^{bw-1} - 1)$; where *quant* represents the candidate input feature, *param* represents the candidate feature-value quantization hyperparameter, *data* represents the floating-point-type input feature, *bw* represents the current quantization bit width, *clip* represents a clipping function, *round* represents a rounding operation.

For example, before processing the candidate input feature based on the pseudo weight of the target network layer, to obtain the floating-point-type output feature of the target network layer, the method further includes: performing simulated quantization on the floating-point-type weight of the target network layer by the target weight quantization hyperparameter of the target network layer and the target weight quantization bit width of the target network layer, to obtain the pseudo weight of the target network layer.

For example, determining the quantization error corresponding to the candidate feature-value quantization hyperparameter based on the floating-point-type output feature of the target network layer includes: determining a sample output feature based on the floating-point-type output feature of the target network layer, where the sample output feature is an output feature of a reference network layer in the sample decoding network, and the reference network layer is any one network layer located after the target network layer; determining the quantization error corresponding to the candidate feature-value quantization hyperparameter based on the sample output feature and a reference output feature; where obtaining the reference output feature includes: decoding a sample feature from a sample bitstream, determining a floating-point-type input feature corresponding to the sample decoding network based on the sample feature, and determining the reference output feature based on the floating-point-type input feature, where the reference output feature is an output feature of the reference network layer in the sample decoding network.

For example, the above execution order is only for the convenience of describing the given examples. In practical applications, the execution order of steps can also be changed without limitation. Moreover, in other embodiments, the steps of the corresponding method cannot necessarily be executed in the order shown and described in the present disclosure, and the steps included in the method can be more or less than those described in the present disclosure. In addition, the single step described in the present disclosure can be decomposed into multiple steps for description in other embodiments. The multiple steps described in the present disclosure can also be combined into a single step for description in other embodiments.

From the above technical solutions, it can be seen that in the embodiments of the present disclosure, the target feature corresponding to the current picture block is decoded from the bitstream corresponding to the current picture block. Based on the target feature, the first input feature of the target decoding network is determined. The first input feature is converted into a second input feature based on the target feature-value quantization bit width and the target feature-value quantization hyperparameter. The second input feature is processed based on the integer-type weight of the target decoding network to obtain the output feature of the target decoding network. Based on the output feature, the reconstructed picture block corresponding to the current picture block is determined. Therefore, an end-to-end video image compression method is proposed, which can achieve the decoding of video pictures based on the decoding network and improve encoding and decoding efficiency. A decoding network with fixed-point-type weight(s) is constructed using the target weight quantization bit width(s) and target weight quantization hyperparameter(s). Target feature-value quantization bit width(s) and target feature-value quantization hyperparameter(s) are used to generate fixed-point-type input feature(s), achieving adaptive decoding acceleration and reducing decoding computation while ensuring decoding quality.

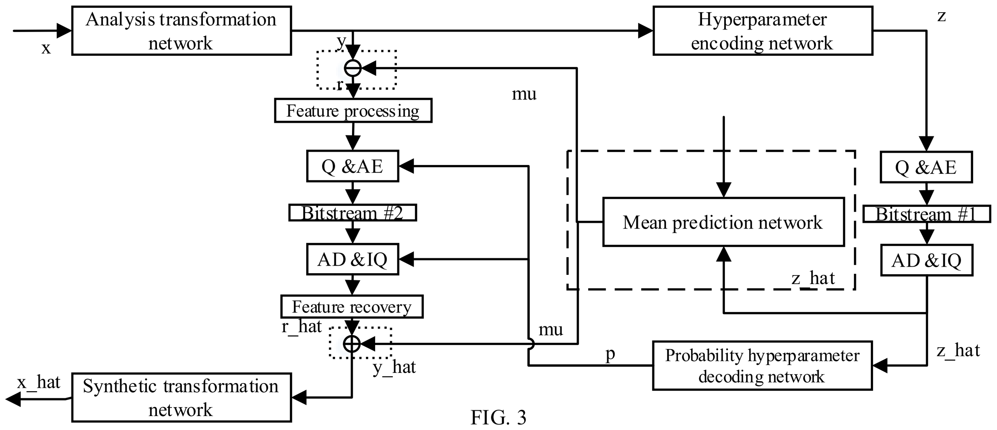

Embodiment 2: the processing procedure of the encoder can be seen in FIG. 3. FIG. 3 is only an example, and does not intend to limit.

After obtaining the current picture block x (where the current picture block x can be the original picture block x, i.e., the input picture block), the encoder can analyze and transform the current picture block x through an analysis transform network (i.e., a neural network) to obtain the picture feature y corresponding to the current picture block x. Where performing feature transform on the current picture block x by the analysis transform network refers to: transforming the current picture block x to a picture feature y in a latent domain, thereby facilitating all subsequent processes to operate in the latent domain.

A picture can be divided into one picture block or multiple picture blocks. If the picture is divided into one picture block, the current picture block x can also be a picture, which means that the encoding and decoding processes for the picture block can be directly applied to the picture.

After obtaining the picture feature y, the encoder performs coefficient hyperparameter feature transform on the picture feature y to obtain the coefficient hyperparameter feature z. For example, the picture feature y can be input to a hyperparameter encoding network (i.e., a neural network), where the hyperparameter encoding network performs coefficient hyperparameter feature transform on the picture feature y to obtain the coefficient hyperparameter feature z. Where the hyperparameter encoding network can be a trained neural network. The training process of the hyperparameter encoding network is not limited, as long as the trained hyperparameter encoding network can perform the coefficient hyperparameter feature transform on the picture feature y. Where the picture feature y in the latent domain is processed by a hyperparameter encoding network to obtain hyper prior latent information z.

After obtaining the coefficient hyperparameter feature z, the encoder can quantize the coefficient hyperparameter feature z to obtain the hyperparameter quantized feature corresponding to the coefficient hyperparameter feature z, where the Q operation in FIG. 3 represents the quantization process. After the hyperparameter quantized feature corresponding to the coefficient hyperparameter feature z is obtained, the hyperparameter quantized feature is encoded to obtain the Bitstream#1 (i.e., the first bitstream, which belongs to the main bitstream corresponding to the current picture block) corresponding to the current picture block. The AE operation in FIG. 3 represents the encoding process, such as entropy encoding. Alternatively, after obtaining the coefficient hyperparameter feature z, the encoder can directly encode the coefficient hyperparameter feature z to obtain the Bitstream#1 corresponding to the current picture block, without involving the quantization process. Where the hyperparameter quantized feature or coefficient hyperparameter feature z carried in Bitstream#1 is mainly used to obtain the mean and the probability distribution parameter of the probability distribution model.

After obtaining the Bitstream#1 corresponding to the current picture block, the encoder can transmit the Bitstream#1 corresponding to the current picture block to the decoder. The processing procedure of the decoder for the Bitstream#1 corresponding to the current picture block is referred to the subsequent embodiments.

After obtaining the Bitstream#1 corresponding to the current picture block, the encoder can also decode bitstream#1 to obtain hyperparameter quantized feature. AD in FIG. 3 represents the decoding process. Then, the hyperparameter quantized feature is inverse quantized to obtain the coefficient hyperparameter feature z_hat, where the coefficient hyperparameter feature z_hat can be the same or different from the coefficient hyperparameter feature z. The IQ operation in FIG. 3 represents the inverse quantization process. Alternatively, after obtaining the Bitstream#1 corresponding to the current picture block, the encoder can also decode Bitstream#1 to obtain the coefficient hyperparameter feature z_hat, without involving the inverse quantization process of the coefficient hyperparameter feature z_hat.

For the encoding process of Bitstream#1, an encoding method with a fixed probability density model can be used, and for the decoding process of Bitstream#1, a decoding method with a fixed probability density model can be used, which is not limited.

After obtaining the coefficient hyperparameter feature z_hat, the encoder can perform context-based prediction based on the coefficient hyperparameter feature z_hat of the current picture block and the picture feature y_hat of the previous picture block (the determination process of picture feature y_hat is described in the subsequent embodiments), to obtain the predicted value mu (i.e., mean mu) corresponding to the current picture block. For example, the coefficient hyperparameter feature z_hat and picture feature y_hat are input to the mean prediction network, and the mean prediction network determines the predicted value mu based on the coefficient hyperparameter feature z_hat and picture feature y_hat. This prediction process is not limited. Where for the context-based prediction process, the input includes the coefficient hyperparameter feature z_hat and the decoded picture feature y_hat, where the initial coefficient hyperparameter feature z_hat and the decoded picture feature y_hat are jointly input to obtain a more accurate predicted value mu. The predicted value mu is used to be subtracted from the original feature to obtain the residual, and the residual is added to the decoded feature to obtain the reconstructed y.

It should be noted that the mean prediction network is an optional neural network. That is, the mean prediction network can be omit, which means there is no need to determine the predicted value mu through the mean prediction network. The dashed box in FIG. 3 indicates that the mean prediction network is optional.

After obtaining the picture feature y, the encoder can determine the residual feature r based on the picture feature y and the predicted value mu, such as taking the difference between the picture feature y and the predicted value mu as the residual feature r. Then, the residual feature r is subjected to feature processing to obtain the picture feature *s*. The feature processing process is not limited and can be any feature processing method. In this case, it is necessary to deploy a mean prediction network to provide the predicted value mu. Alternatively, after obtaining the picture feature y, the encoder can perform feature processing on the picture feature y to obtain the picture feature *s*. The feature processing process is not limited and can be any feature processing method. In this case, there is no need to deploy a mean prediction network, and the residual process is represented by a dashed box as an optional process.

After obtaining the picture feature *s*, the encoder can quantize the picture feature *s* to obtain the corresponding picture quantized feature. The Q operation in FIG. 3 represents the quantization process. After obtaining the picture quantized feature corresponding to the picture feature *s*, the encoder can encode the picture quantized feature to obtain the Bitstream#2 (i.e., the second bitstream) corresponding to the current picture block. The AE operation in FIG. 3 represents the encoding process, such as the entropy encoding process. Alternatively, the encoder can directly encode the picture feature *s* to obtain the Bitstream#2 corresponding to the current picture block, without involving the quantization process of the picture feature *s*.

After obtaining the Bitstream#2 corresponding to the current picture block, the encoder can transmit the Bitstream#2 corresponding to the current picture block to the decoder. The processing procedure of the decoder for the Bitstream#2 corresponding to the current picture block is referred to the subsequent embodiments.

After obtaining the Bitstream#2 corresponding to the current picture block, the encoder can further decode Bitstream#2 to obtain the picture quantized feature. The AD in FIG. 3 represents the decoding process. Then, the encoder can perform inverse quantization on the picture quantized feature to obtain picture features *s'*, where the picture feature *s'* can be the same or different from the picture feature *s*. The IQ operation in FIG. 3 represents the inverse quantization process. Alternatively, after obtaining the Bitstream#2 corresponding to the current picture block, the encoder can further decode Bitstream#2 to obtain picture features *s'*, without involving the inverse quantization process of picture quantized feature.

After obtaining the picture feature *s'*, the encoder can perform feature restoration (i.e., the inverse process of the feature processing) on the picture feature *s'*, to obtain the residual feature r_hat. There are no restrictions on this feature restoration process, and any feature restoration method can be used. The residual feature r_hat can be the same or different from the residual feature r. After obtaining the residual feature r_hat, the encoder determines the picture feature y_hat based on the residual feature r_hat and the predicted value mu. The picture feature y_hat and the picture feature y can be the same or different. For example, the sum of the residual feature r_hat and the predicted value mu is taken as the picture feature y_hat. In this case, it is necessary to deploy a mean prediction network to provide the predicted value mu. Alternatively, after obtaining the picture feature *s'*, the encoder can perform feature restoration (i.e., the inverse process of the feature processing) on the picture feature s" to obtain the picture feature y_hat, where the picture feature y_hat can be the same or different from the picture feature y. In this case, there is no need to deploy a mean prediction network, and the residual process is represented by a dashed box as an optional process.

After obtaining the picture feature y_hat, the encoder can perform a synthesis transform on the picture feature y_hat to obtain the reconstructed picture block x_hat corresponding to the current picture block x. For example, the picture feature y_hat is input to the synthesis transform network, where the synthesis transform network synthesizes and transforms the picture feature y_hat to obtain the reconstructed picture block x_hat. Then, the picture reconstruction process is completed.

In an embodiment, when encoding the picture quantized feature or the picture feature s to obtain the Bitstream#2 corresponding to the current picture block, the encoder needs to first determine a probability distribution model, and then encode the picture quantized feature or picture feature s based on the probability distribution model. In addition, when decoding Bitstream#2. The encoder also needs to first determine the probability distribution model, and then decode Bitstream#2 based on the probability distribution model.

To obtain the probability distribution model, as shown in FIG. 3, after obtaining the coefficient hyperparameter feature z_hat, the encoder can perform coefficient hyperparameter feature inverse transform on the coefficient hyperparameter feature z_hat, to obtain the probability distribution parameter p. For example, the coefficient hyperparameter feature z_hat is input to the probability hyperparameter decoding network, where the probability hyperparameter decoding network performs coefficient hyperparameter feature inverse transform on the coefficient hyperparameter feature z_hat to obtain the probability distribution parameter p. After obtaining the probability distribution parameter p, the encoder can generate a probability distribution model based on the probability distribution parameter p. The probability hyperparameter decoding network can be a trained neural network. The training process of the probability hyperparameter decoding network is not limited, as long as the probability hyperparameter decoding network can perform coefficient hyperparameter feature inverse transform on the coefficient hyperparameter feature z_hat.

In an embodiment, the processing of the encoder described above is performed by a deep learning model or a neural network model, thereby achieving end-to-end picture compression and encoding processes, which is not limited.

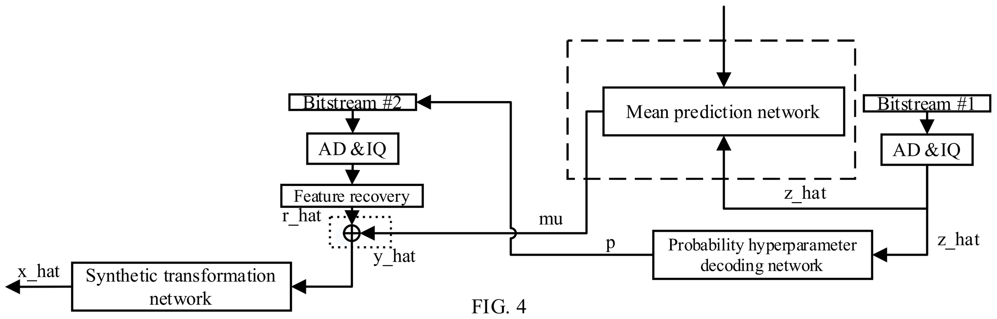

Embodiment 3: the processing procedure of the decoder can be seen in FIG. 4. FIG. 4 is only an example and does not intend to limit.

After obtaining the Bitstream#1 corresponding to the current picture block, the decoder can also decode Bitstream#1 to obtain hyperparameter quantized feature. AD in FIG. 4 represents the decoding process. Then, the hyperparameter quantized feature is inverse quantized to obtain the coefficient hyperparameter feature z_hat, where the coefficient hyperparameter feature z_hat can be the same or different from the coefficient hyperparameter feature z. The IQ operation in FIG. 4 represents the inverse quantization process. Alternatively, after obtaining the Bitstream#1 corresponding to the current picture block, the decoder can also decode Bitstream#1 to obtain the coefficient hyperparameter feature z_hat, without involving the inverse quantization process of the coefficient hyperparameter feature z_hat.

For the decoding process of Bitstream#1, a decoding method with a fixed probability density model can be used, which is not limited.

A picture can be divided into one picture block or multiple picture blocks. If the picture is divided into one picture block, the current picture block x can also be a picture, which means that the decoding process for the picture block can be directly applied to the picture.

After obtaining the coefficient hyperparameter feature z_hat, the decoder can perform context-based prediction based on the coefficient hyperparameter feature z_hat of the current picture block and the residual feature y_hat of the previous picture block (the determination process of residual feature y_hat is described in the subsequent embodiments), to obtain the predicted value mu (i.e., mean mu) corresponding to the current picture block. For example, the coefficient hyperparameter feature z_hat and residual feature y_hat are input to the mean prediction network, and the mean prediction network determines the predicted value mu based on the coefficient hyperparameter feature z_hat and residual feature y_hat. This prediction process is not limited. Where for the context-based prediction process, the input includes the coefficient hyperparameter feature z_hat and the decoded picture feature y_hat, where the initial coefficient hyperparameter feature z_hat and the decoded picture feature y_hat are jointly input to obtain a more accurate predicted value mu.

It should be noted that the mean prediction network is an optional neural network. That is, the mean prediction network can be omit, which means there is no need to determine the predicted value mu through the mean prediction network. The dashed box in FIG. 4 indicates that the mean prediction network is optional.

After obtaining the Bitstream#2 corresponding to the current picture block, the decoder can further decode Bitstream#2 to obtain the picture quantized feature. The AD in FIG. 4 represents the decoding process. Then, the decoder can perform inverse quantization on the picture quantized feature to obtain picture features s', where the picture feature s' can be the same or different from the picture feature s. The IQ operation in FIG. 4 represents the inverse quantization process. Alternatively, after obtaining the Bitstream#2 corresponding to the current picture block, the decoder can further decode Bitstream#2 to obtain picture features s', without involving the inverse quantization process of picture quantized feature.

After obtaining the picture feature s', the decoder can perform feature restoration (i.e., the inverse process of the feature processing) on the picture feature s' to obtain the residual feature r_hat, where the residual feature r_hat is the same or different from the residual feature r. After obtaining the residual feature r_hat, the decoder determines the picture feature y_hat based on the residual feature r_hat and the predicted value mu. The picture feature y_hat and the picture feature y are the same or different. For example, the sum of the residual feature r_hat and the predicted value mu is taken as the picture feature y_hat. In this case, it is necessary to deploy a mean prediction network to provide the predicted value mu. Alternatively, after obtaining the picture feature s', the decoder can perform feature restoration on the picture feature s' to obtain the picture feature y_hat, where picture feature y_hat can be the same or different from the picture feature y. In this case, there is no need to deploy a mean prediction network, and the residual process is represented by a dashed box as an optional process.

After obtaining the picture feature y_hat, the decoder can perform a synthesis transform on the picture feature y_hat to obtain the reconstructed picture block x_hat corresponding to the current picture block x. For example, the picture feature y_hat is input to the synthesis transform network, where the synthesis transform network synthesizes and transforms the picture feature y_hat to obtain the reconstructed picture block x_hat. Then, the picture reconstruction process is completed.

In an embodiment, when decoding Bitstream#2. the decoder needs to first determine the probability distribution model, and then decode Bitstream#2 based on the probability distribution model. To obtain the probability distribution model, as shown in FIG. 4, after obtaining the coefficient hyperparameter feature z_hat, the decoder can perform coefficient hyperparameter feature inverse transform on the coefficient hyperparameter feature z_hat, to obtain the probability distribution parameter p. For example, the coefficient hyperparameter feature z_hat is input to the probability hyperparameter decoding network, where the probability hyperparameter decoding network performs coefficient hyperparameter feature inverse transform on the coefficient hyperparameter feature z_hat to obtain the probability distribution parameter p. After obtaining the probability distribution parameter p, the encoder can generate a probability distribution model based on the probability distribution parameter p. The probability hyperparameter decoding network can be a trained neural network. The training process of the probability hyperparameter decoding network is not limited, as long as the probability hyperparameter decoding network can perform coefficient hyperparameter feature inverse transform on the coefficient hyperparameter feature z_hat to obtain the probability distribution apparatus p.

In an embodiment, the processing of the decoder described above is performed by a deep learning model or a neural network model, thereby achieving end-to-end picture compression and encoding processes, which is not limited.

Embodiment 4: regarding Embodiments 2 and 3, the encoder involves an analysis transform network, a hyperparameter encoding network, a mean prediction network, a probability hyperparameter decoding network, and a synthesis transform network. The decoder involves a mean prediction network, a probability hyperparameter decoding network, and a synthesis transform network. All of the above networks can be neural networks. All neural networks involved in the decoder can be used as the decoding network, or some of the neural networks involved in the decoder can be used as the decoding network, which is not limited. For example, all networks in the mean prediction network, the probability hyperparameter decoding network, and the synthetic transform network can be used as the decoding network, or some networks in the mean prediction network, probability hyperparameter decoding network, and synthetic transform network can be used as the decoding network. When other neural networks are involved in the decoding process, they can also be used as the decoding network, which is not limited.

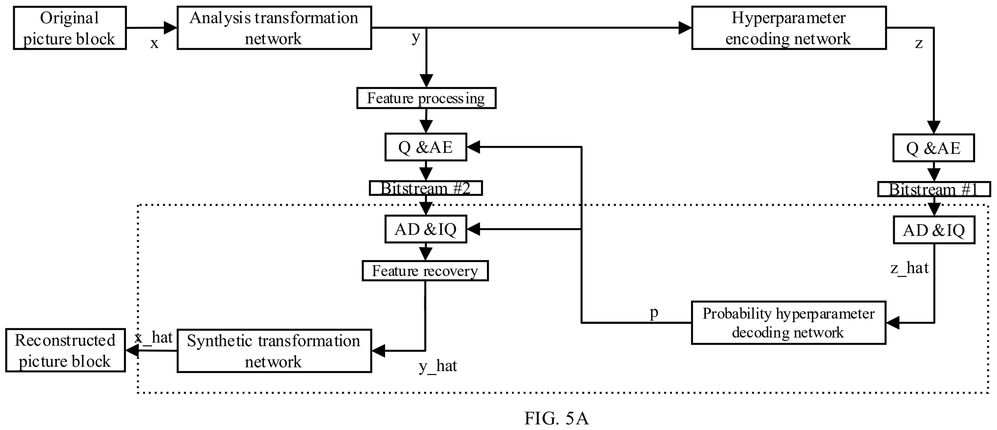

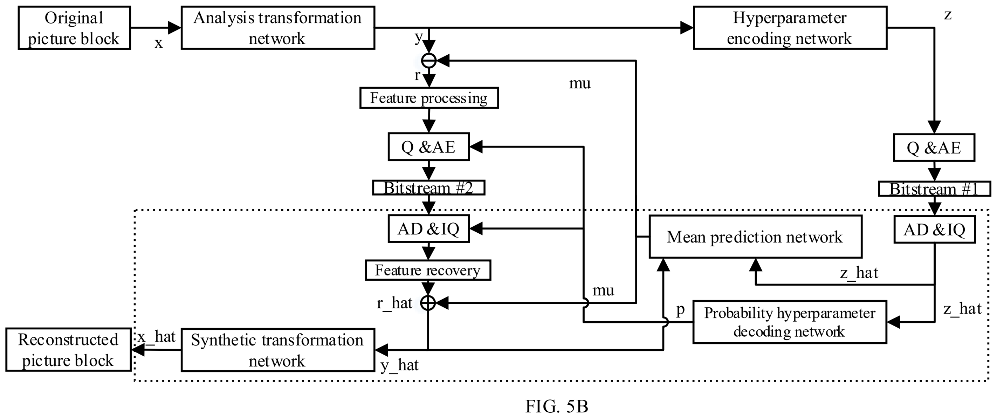

In an embodiment, taking all neural networks involved in the decoder as the decoding network as an example, as shown in FIG. 5A, the decoding network can include a probability hyperparameter decoding network and a synthetic transform network. As shown in FIG. 5B, the decoding network can include a mean prediction network, a probability hyperparameter decoding network, and a synthetic transform network. In FIGs. 5A and 5B, the decoding network can also include only the synthesis transform network and no other networks, which is not limited.

In an embodiment, the encoder or decoder can decode the target feature corresponding to the current picture block from the corresponding bitstream (such as the first bitstream and the second bitstream), determine the input feature of the decoding network based on the target feature, process the input feature based on the decoding network, to obtain the output feature of the decoding network. After obtaining the output feature, the reconstructed picture block corresponding to the current picture block can be determined based on the output feature. The following describes this process.

As shown in FIG. 5A, after obtaining Bitstream#1 (i.e., the first bitstream) corresponding to the current picture block, the encoder or decoder can decode Bitstream#1 to obtain the hyperparameter quantization feature (i.e., the target feature of the current picture block), inverse quantize the hyperparameter quantization feature, to obtain coefficient hyperparameter feature z_ hat (i.e., the input feature of the probability hyperparameter decoding network determined based on the target feature). Alternatively, after obtaining the Bitstream#1 corresponding to the current picture block, the encoder or decoder can decode Bitstream#1 to obtain the coefficient hyperparameter feature z_hat (i.e., the target feature of the current picture block, which is directly used as the input feature of the probability hyperparameter decoding network), without involving the inverse quantization process of the coefficient hyperparameter feature z_hat.

After obtaining the coefficient hyperparameter feature z_hat (i.e., the input feature of the probability hyperparameter decoding network), the coefficient hyperparameter feature z_hat is input to the probability hyperparameter decoding network (i.e., the decoding network). The probability hyperparameter decoding network performs coefficient hyperparameter feature inverse transform on the coefficient hyperparameter feature z_hat to obtain the probability distribution parameter p (i.e., the output feature of the probability hyperparameter decoding network) corresponding to the current picture block. After the probability distribution parameter p is obtained, a probability distribution model can be generated based on the probability distribution parameter p.

After obtaining the Bitstream#2 (i.e., the second bitstream) corresponding to the current picture block, the encoder or decoder can also decode the Bitstream#2 to obtain the picture quantization feature (i.e., the target feature of the current picture block), perform inverse quantization on the picture quantization feature to obtain the picture feature s', perform feature restoration on the picture feature s', to obtain the picture feature y_hat (i.e., determine the input feature of the synthesis transform network based on the target feature). Alternatively, after obtaining the Bitstream#2 corresponding to the current picture block, the encoder or decoder can also decode Bitstream#2 to obtain the picture feature s' (i.e., the target feature of the current picture block), without involving the inverse quantization process of the picture quantization feature. The picture feature s' can be restored to obtain the picture feature y_hat (i.e., the input feature of the synthesis transform network is determined based on the target feature). When decoding Bitstream#2, the encoder or decoder can decode Bitstream#2 based on a probability distribution model, and this process will not be repeated.

After obtaining the picture feature y_hat, the encoder or decoder inputs the picture feature y_hat to the synthesis transform network (i.e., decoding network). The synthesis transform network performs synthesis transform on the picture feature y_hat to obtain the reconstructed picture block x_hat corresponding to the current picture block x (i.e., the output feature of the synthesis transform network). From the above, it can be seen that synthetic transform is performed on the picture feature y_hat based on the synthetic transform network to obtain the reconstructed picture block x_hat corresponding to the current picture block x.

After obtaining the output feature of the synthetic transform network, the output feature of the synthetic transform network can be used as the reconstructed picture block x_hat corresponding to the current picture block x, that is, based on this output feature, the reconstructed picture block x_hat corresponding to the current picture block x can be determined.

As shown in FIG. 5B, after obtaining the Bitstream#1 corresponding to the current picture block, the encoder or decoder can decode Bitstream#1 to obtain the hyperparameter quantization feature (i.e., the target feature of the current picture block), inverse quantize the hyperparameter quantization feature, to obtain the coefficient hyperparameter feature z_ hat (i.e., the input feature of the probability hyperparameter decoding network determined based on the target feature). Alternatively, after obtaining the Bitstream#1 corresponding to the current picture block, Bitstream#1 can be decoded to obtain the coefficient hyperparameter feature z_hat (i.e., the target feature of the current picture block, where the target feature is directly used as the input feature of the probability hyperparameter decoding network).

After obtaining the coefficient hyperparameter feature z_hat (i.e., the input feature of the probability hyperparameter decoding network), the coefficient hyperparameter feature z_hat is input to the probability hyperparameter decoding network (i.e., the decoding network). The probability hyperparameter decoding network performs coefficient hyperparameter feature inverse transform on the coefficient hyperparameter feature z_hat to obtain the probability distribution parameter p (i.e., the output feature of the probability hyperparameter decoding network) corresponding to the current picture block. After the probability distribution parameter p is obtained, a probability distribution model can be generated based on the probability distribution parameter p.

After obtaining the coefficient hyperparameter feature z_hat (i.e., the input feature of the mean prediction network), the coefficient hyperparameter feature z_hat and the picture feature y_hat of the previous picture block are input to the mean prediction network (i.e., the decoding network). The mean prediction network determines the predicted value mu (i.e., the output feature of the mean prediction network) based on the coefficient hyperparameter feature z_hat and the picture feature y_hat, and performs context-based prediction to obtain the predicted value mu (i.e., the mean mu) corresponding to the current picture block.

After obtaining the corresponding Bitstream#2 for the current picture block, the encoder or decoder can also decode Bitstream#2 to obtain picture quantization feature (i.e., the target feature of the current picture block), perform inverse quantization on the picture quantization feature to obtain picture feature s', perform feature restoration (i.e., residual restoration, which is the inverse process of residual processing) on the picture feature s', to obtain the residual feature r_hat, and determine picture feature y_hat based on the residual feature r_hat and predicted value mu. For example, the sum of the residual feature r_hat and predicted value mu is used as the picture feature y_hat (i.e., the input feature of the synthesis transform network is determined based on the target feature).

Alternatively, after obtaining the Bitstream#2 corresponding to the current picture block, the encoder or decoder can also decode Bitstream#2 to obtain the picture feature *s'* (i.e., the target feature of the current picture block), perform feature restoration on the picture feature *s'* to obtain the residual feature r_hat, and determine the picture feature y_hat based on the residual feature r_hat and the predicted value mu. For example, the sum of the residual feature r_hat and the predicted value mu can be used as the picture feature y_hat (i.e., the input feature of the synthesis transform network is determined based on the target feature).

After obtaining the picture feature y_hat, the encoder or decoder inputs the picture feature y_hat to the synthesis transform network (i.e., decoding network). The synthesis transform network performs synthesis transform on the picture feature y_hat to obtain the reconstructed picture block x_hat corresponding to the current picture block x (i.e., the output feature of the synthesis transform network). From the above, it can be seen that synthetic transform is performed on the picture feature y_hat based on the synthetic transform network to obtain the reconstructed picture block x_hat corresponding to the current picture block x.

After obtaining the output feature of the synthetic transform network, the output feature of the synthetic transform network can be used as the reconstructed picture block x_hat corresponding to the current picture block x, that is, based on this output feature, the reconstructed picture block x_hat corresponding to the current picture block x can be determined.

Embodiment 5: regarding Embodiment 4, the decoding network can be a floating-point-type decoding network, which means that the decoding network can use floating-point-type weights (i.e., floating-point-type parameters), that is, the weights of the decoding network are all floating-point-type weights, the input feature values of the decoding network are floating-point-type feature values, and the output feature values of the decoding network are floating-point-type feature values. For example, for each network layer of the decoding network, the network layer can use floating-point-type weights, that is, the weights of the network layer are all floating-point-type weights, the input feature values of the network layer are floating-point-type feature values, and the output feature values of the network layer are floating-point-type feature values.

However, to implement a floating-point-type weight decoding network, the decoder needs to store floating-point-type weights, and storing floating-point-type weights requires a large amount of storage resources. Moreover, when the decoder uses floating-point-type weights to process floating-point-type feature values, it requires a large amount of computational resources, and the processing speed of the decoder is relatively slow.

In response to the above findings, this embodiment proposes an efficient inference method for image encoding and decoding, which can use a fixed-point-type decoding network to process picture features. The decoding network involved in Embodiment 4 is a fixed-point-type decoding network. That is, the decoding network can use fixed-point-type weights (i.e., fixed-point-type parameters), that is, the weights of the decoding network are fixed-bit weights, the input feature values of the decoding network are fixed-bit feature values, and the output feature values of the decoding network are fixed-bit feature values. For example, for the network layer of the decoding network, fixed-point-type weights can be used, that is, the weights of the network layer are fixed-bit weights, the input feature values of the network layer are fixed-bit feature values, and the output feature values of the network layer are fixed-bit feature values.

For example, in order to implement a decoding network with fixed-point-type weights, the decoder needs to store fixed-bit weights (such as 8-bit, or 16-bit, etc.), and when storing fixed-bit weights, only a small amount of storage resources are required, thus saving storage resources. Moreover, when the decoder uses fixed-bit weights to process fixed-bit feature values, it only requires a small amount of computational resources, thus saving computational resources. Moreover, when the decoder uses fixed-bit weights to process fixed-bit feature values, it can improve processing speed and achieve adaptive acceleration of the decoding process.

This embodiment is a non-training scheme that can be quickly integrated into any floating-point-type decoding network to obtain a decoding network with fixed-point-type weights. The decoding network with fixed-point-type weights can be directly inferred on the hardware platform. When obtaining the decoding network with fixed-point-type weights, the sensitivity of each network layer to quantization is evaluated first to determine the more suitable quantization bit width for each network layer, thereby ensuring the quantization compression rate of the decoding network and the quantization performance of the decoding network.

For example, when quantifying floating-point-type parameters of a decoding network into fixed-point-type parameters, the storage consumption of the decoding network can be reduced, and when quantifying floating-point feature values of the decoding network into fixed-point feature values, the bandwidth for forward computation can also be reduced. In addition, converting floating-point operations in the decoding network to fixed-point operations can reduce the computational complexity of the decoding network, and the computation under fixed-point types can also help achieve decoding consistency between different devices. However, the quantization of the decoding network is achieved by reducing the data type and computational accuracy, which affects the performance of the decoding network and is unacceptable in image encoding and decoding. In response to the above findings, considering the neural network-based decoder, the sensitivity to quantization is different for each network layer in the neural network when decoding the bitstream. Some network layers can maintain quantization performance at lower bits, and some network layers require higher bits to ensure quantization accuracy. This is related to the parameters and feature distributions learned by the neural network. In this embodiment, to achieve maximum compression of bit width and ensure performance after compression, an efficient compression and inference method is proposed, where a decoding network with fixed-point weight(s) is constructed using the target weight quantization bit width(s) and target weight quantization hyperparameter(s), and target feature-value quantization bit width(s) and target feature-value quantization hyperparameter(s) are used to generate fixed-point-type input feature(s), achieving adaptive decoding acceleration and reducing decoding computation while ensuring decoding quality.

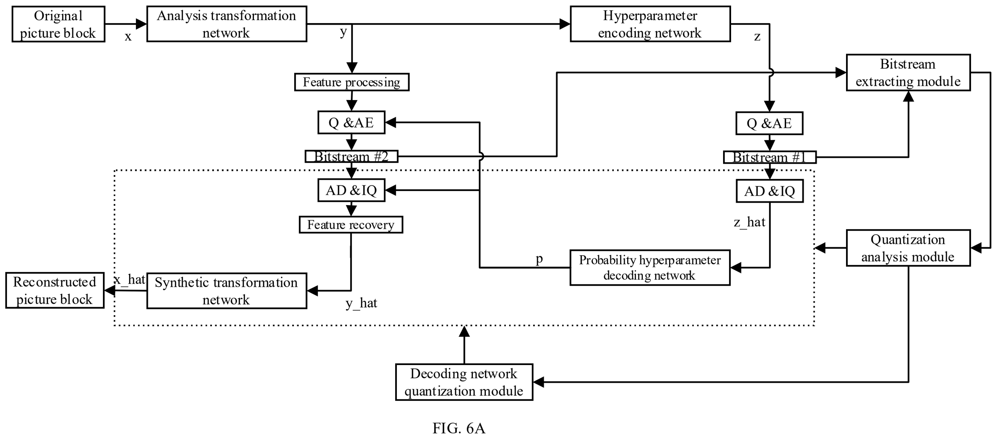

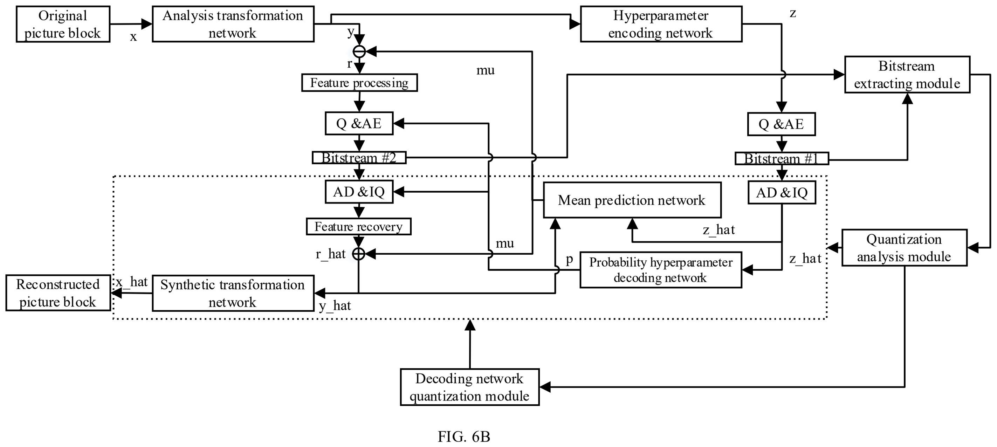

Embodiment 6: referring to FIG. 6A, three modules have been added to the decoding network (such as a probability hyperparameter decoding network and a synthetic transform network) shown in FIG. 5A: bitstream extracting module, quantization analysis module, and decoding network quantization module. Referring to FIG. 6B, three modules have been added to the decoding network (such as a mean prediction network, a probability hyperparameter decoding network, and a synthesis transform network) shown in FIG. 5B: bitstream extracting module, quantization analysis module, and decoding network quantization module.

For example, after the decoding network is trained (using floating-point-type weights to obtain the decoding network), the floating-point-type weights of the decoding network are fixed. For distinguishing, the decoding network using floating-point-type weights is called the sample decoding network. The sample decoding network can include multiple network layers using floating-point-type weights, and the multiple network layers can include the target network layer. The target network layer is a network layer that needs to use integer-type weight (that is, it needs to convert the floating-point-type weight of the target network layer into the integer-type weight). Assuming that the sample decoding network includes network layer 1 and network layer 2, where network layer 1 requires integer-type weight and network layer 2 does not require integer-type weight, then network layer 1 is the target network layer and network layer 2 is not the target network layer.

In an embodiment, all network layers in the sample decoding network can be used as the target network layer, or some network layers in the sample decoding network can be used as the target network layer, or all convolutional layers in the sample decoding network can be used as the target network layer. The above are just a few examples, which is not limited. Any one or more network layers in the sample decoding network can be used as the target network layers. For example, all network layers are the target networks.

For example, to convert the sample decoding network into a target decoding network with fixed-point-type weights, the following steps can be taken.

In step S11, the bitstream extracting module obtains a sample bitstream and inputs the sample bitstream to the quantization analysis module.

For example, several pictures from real-world scenarios (such as application scenarios of image/picture capture devices) can be collected, such as 100 pictures, 200 pictures, etc. The process shown in FIG. 3 can be used to process each picture to obtain the first bitstream (Bitstream#1) and second bitstream (Bitstream#2) corresponding to the picture. The first bitstream and second bitstream can be referred to as sample bitstreams, or the first bitstream can be referred to as a sample bitstream, or the second bitstream can be referred to as a sample bitstream. For the convenience of description, in the subsequent process, the first bitstream and second bitstream will be referred to as sample bitstreams as an example for illustration. The bitstream extracting module can obtain the sample bitstream corresponding to each picture and input these sample bitstreams to the quantization analysis module.

In step S12, the quantization analysis module receives the sample bitstream corresponding to each picture and stores the sample bitstream corresponding to each picture.

In step S13, the quantization analysis module decodes the sample feature from the sample bitstream, determines the floating-point-type input feature corresponding to the sample decoding network based on the sample feature, and determines the reference output feature corresponding to the sample feature based on the floating-point-type input feature. The reference output feature can be the output feature of the reference network layer in the sample decoding network. Where the reference network layer can be any one network layer in the sample decoding network, such as the last network layer in the sample decoding network, or the second to last network layer in the sample decoding network, or the last target network layer in the sample decoding network, or any one network layer located after the last target network layer in the sample decoding network, which is not limited.

For example, for each sample bitstream, the sample bitstream can be decoded to obtain the sample feature. This process is described in the process of obtaining the target feature in Embodiment 4 and will not be repeated here. After obtaining the sample feature, the floating-point-type input feature corresponding to the sample decoding network is determined based on the sample feature. This process is described in Embodiment 4 for the process of determining the input feature of the decoding network based on the target feature, and will not be repeated here. After obtaining the floating-point-type input feature corresponding to the sample decoding network, the floating-point-type input feature is input to the sample decoding network and sequentially pass through each network layer of the sample decoding network. After passing through the reference network layer of the sample decoding network, the output feature of the reference network layer is used as the reference output feature corresponding to the sample feature.

For example, for each sample bitstream, the reference output feature corresponding to that sample bitstream can be obtained. Based on this, the quantization analysis module can store the average value of the reference output features corresponding to all sample bitstreams, or the maximum value of the reference output features corresponding to all sample bitstreams, or the minimum value of the reference output features corresponding to all sample bitstreams. Taking storing the average value of the reference output features corresponding to all sample bitstreams as an example, this average value is stored as the reference output feature.

In step S14, for each target network layer in the sample decoding network, the quantization analysis module obtains a weight quantization hyperparameter candidate list corresponding to the target network layer. The weight quantization hyperparameter candidate list may include multiple candidate weight quantization hyperparameters.

Firstly, the quantization analysis module determines a maximum weight value based on all floating-point-type weights of the target network layer; where each of the all floating-point-type weights includes a plurality of weight values, and the maximum weight value is a maximum value in all weight values of the all floating-point-type weights. For example, the target network layer can include multiple floating-point-type weights, where each of the floating-point-type weights includes multiple weight values. For each floating-point-type weight, the maximum value can be selected from all weight values corresponding to that floating-point-type weight, and then the maximum weight value can be selected from the maximum values corresponding to all floating-point-type weights. For example, assuming the target network layer is network layer 1, the maximum weight value can be denoted as $max_l = \max(abs(w_{0\_l}), abs(w_{1\_l}), \ldots, abs(w_{n\_l}))$, $abs(w_{0\_l})$ represents the maximum value corresponding to the first floating-point-type weight of network layer l, and so on, $max_l$ represents the maximum weight value of all floating-point-type weights.

The target network layer can include multiple channels. If all channels correspond to the same target weight quantization hyperparameter, the maximum weight value is the maximum value among the all weights of the floating-point-type weights of all channels. If each channel corresponds to a target weight quantization hyperparameter separately, then each channel corresponds to a maximum weight value, that is, the maximum weight value is the maximum value among the all weight values of the floating-point-type weight of that channel. For the convenience of description, the following will take the example of all channels corresponding to the same target weight quantization hyperparameter. The implementation method of each channel separately corresponding to a target weight quantization hyperparameter is similar. The same method can be used to determine the target weight quantization hyperparameter for each channel separately, and the determination method is the same as the determination method of the target weight quantization hyperparameter for all channels.

Then, the quantization analysis module generates the initial weight quantization hyperparameter corresponding to the target network layer based on the maximum weight value. For example, the following formula can be used to generate the initial weight quantization hyperparameter corresponding to the target network layer: $param = bw - 1 - ceil(log2(max))$; where param is used to represent the initial weight quantization hyperparameter corresponding to the target network layer, bw is used to represent the fixed quantization bit width, max is used to represent the maximum weight value, and ceil is used to represent the rounding up operation.

For example, the initial weight quantization hyperparameter corresponding to the target network layer is *param*, $param = get\_param(bw, max)$, *bw* is used to represent the quantization bit width corresponding to the target network layer. The quantization bit width corresponding to the target network layer can be a fixed quantization bit width, which can be configured based on experience, such as 4-bit, 8-bit, or 16-bit, etc. For example, the fixed quantization bit width is 8-bit. $param = get\_param(bw, max)$ represents the initial weight quantization hyperparameter calculated based on the data range *max* under the quantization bit width *bw*. Due to the different ways of calculating the initial weight quantization hyperparameter under different quantization algorithms, here is an example of the initial weight quantization hyperparameter: $param = bw - 1 - ceil(log2(max))$.

Then, the quantization analysis module constructs a weight quantization hyperparameter candidate list based on the initial weight quantization hyperparameters, where the weight quantization hyperparameter candidate list can include multiple candidate weight quantization hyperparameters corresponding to the target network layer.

For example, considering that there are usually outliers in the weight values of a neural network (i.e., a value range of an outlier is usually very large), such outliers can affect quantization accuracy. Therefore, a weight quantization hyperparameter candidate list can be constructed based on the initial weight quantization hyperparameter. For example, an example of this weight quantization hyperparameter candidate list can be: $param_{l\text{-}list} = [param_l - 2, param_l - 1, param_l, param_l + 1, param_l + 2]$. The above is only an example of a weight quantization hyperparameter candidate list, and there is no restriction on the candidate weight quantization hyperparameters in the weight quantization hyperparameter candidate list. Taking the target network layer as network layer 1 as an example, $param_l$ represents the initial weight quantization hyperparameter corresponding to network layer 1, and $param_l - 2, param_l - 1, param_l, param_l + 1, param_l + 2$ is the five candidate weight quantization hyperparameters corresponding to network layer l.

In step S15: for each candidate weight quantization hyperparameter, the quantization analysis module uses a fixed quantization bit width and the candidate weight quantization hyperparameter to perform simulated quantification on the floating-point-type weight of the target network layer to obtain the candidate simulated weight.

For example, the quantization bit width corresponding to the target network layer can be a fixed quantization bit width, which can be configured based on experience, such as 4-bit, 8-bit, or 16-bit, etc. For example, the fixed quantization bit width is 8-bit.

For example, each candidate weight quantization hyperparameter in the weight quantization hyperparameter candidate list is traversed sequentially. For the currently traversed candidate weight quantization hyperparameter, a fixed quantization bit width and the candidate weight quantization hyperparameter can be used to perform simulated quantification on the floating-point-type weight of the target network layer to obtain the candidate simulated weight corresponding to the candidate weight quantization hyperparameter. For example, the following formula can be used to perform simulated quantification on the floating-point-type weight of the target network layer to obtain candidate simulated weight:

$$quant = 2^{-param} \times clip(round(data \times 2^{param}), -2^{bw-1}, 2^{bw-1} - 1).$$

Where *quant* is used to represent the candidate simulated weight, *param* is used to represent the candidate weight quantization hyperparameter, *data* is used to represent the floating-point-type weight of the target network layer, *bw* is used to represent the fixed quantization bit width, *clip* is used to represent the clipping function, *round* is used to represent the rounding operation.Due to the different ways of simulated quantization under different quantization algorithms, the above formula is only an example of simulated quantization.

In summary, for each candidate weight quantization hyperparameter, after substituting the candidate weight quantization hyperparameter *param* into the above formula, the candidate simulated weight *quant* corresponding to the candidate weight quantization hyperparameter can be obtained.

In step S16, after obtaining the candidate simulated weight, the quantization analysis module processes the floating-point-type input feature of the target network layer based on the candidate simulated weight to obtain the floating-point-type output feature of the target network layer. The quantization analysis module determines the quantization error corresponding to the candidate weight quantization hyperparameter based on the floating-point-type output feature of the target network layer.

Firstly, the floating-point-type input feature of the target network layer can be obtained. For example, if the target network layer is the first network layer of the sample decoding network, then the input feature of the sample decoding network is the floating-point-type input feature of the target network layer. Alternatively, if the target network layer is not the first network layer of the sample decoding network, the output feature of the previous network layer of the target network layer is used as the floating-point-type input feature of the target network layer. For the previous network layer (referred to as network layer A) of the target network layer, if network layer A is not a network layer that requires integer-type weight, then network layer A directly processes the input feature to obtain a floating-point-type output feature, where the floating-point-type output feature serves as the floating-point-type input feature of the target network layer. If network layer A requires integer-type weight, after obtaining the target weight quantization hyperparameter and target weight quantization bit width of network layer A, the target weight quantization hyperparameter and target weight quantization bit width can also be used to perform simulated quantification on the floating-point-type weight of network layer A to obtain the pseudo weight of network layer A. Through this pseudo weight, the floating-point-type input feature of network layer A is processed to obtain the floating-point-type output feature of network layer A, where the floating-point-type output feature serves as the floating-point-type input feature of the target network layer.

Then, based on the candidate simulated weight, the floating-point-type input feature of the target network layer is processed to obtain the floating-point-type output feature of the target network layer. For example, if the target network layer is a convolutional layer, the floating-point-type input feature of the target network layer is convolved based on candidate simulated weight to obtain the floating-point-type output feature of the target network layer. If the target network layer is a pooling layer, the floating-point-type input feature of the target network layer is pooled based on candidate simulated weight to obtain the floating-point-type output feature of the target network layer. The above is just an example, and there is no limitation on this processing method, which is related to the function supported by the target network layer.

Then, based on the floating-point-type output feature of the target network layer, the quantization error corresponding to the candidate weight quantization hyperparameter is determined. For example, a sample output feature is determined based on the floating-point-type output feature of the target network layer, where the sample output feature is an output feature of a reference network layer in the sample decoding network, and the reference network layer is any one network layer located after the target network layer.

For example, taking the floating-point-type output feature of the target network layer as the input feature of the subsequent network layer (which still uses a floating-point-type weight), the subsequent network layer processes the input feature to obtain the floating-point-type output feature of the subsequent network layer. This process continues until the reference network layer in the sample decoding network processes the input feature to obtain the output feature of the reference network layer, where the output feature of the reference network layer is then used as the sample output feature.

Then, based on the sample output feature and reference output feature, the quantization error corresponding to the candidate weight quantization hyperparameter is determined. For example, based on the sample output feature and reference output feature, an error loss function can be used to determine the quantization error. The error loss function can include but is not limited to loss functions such as MSE (Mean Squared Error), cosine similarity, KL (Kullback-Leibler) divergence, etc., which is not limited.

The sample output feature can be the average of the sample output features corresponding to all sample bitstreams, and the reference output feature can be the average of the reference output features corresponding to all sample bitstreams. Alternatively, the sample output feature may be the maximum value of the sample output features corresponding to all sample bitstreams, and the reference output feature may be the maximum value of the reference output features corresponding to all sample bitstreams. Alternatively, the sample output feature can be the minimum value of the sample output features corresponding to all sample bitstreams, and the reference output feature can be the minimum value of the reference output features corresponding to all sample bitstreams, which is not limited.

In step S17, based on the quantization error corresponding to each candidate weight quantization hyperparameter, the quantization analysis module determines the candidate weight quantization hyperparameter corresponding to the minimum quantization error as the target weight quantization hyperparameter corresponding to the target network layer, and determines the fixed quantization bit width as the target weight quantization bit width corresponding to the target network layer. At this point, the quantization analysis module can obtain the target weight quantization hyperparameter corresponding to the target network layer and the target weight quantization bit width corresponding to the target network layer.

In step S18, the quantization analysis module performs simulated quantization on the floating-point-type weight of the target network layer by the target weight quantization hyperparameter of the target network layer and the target weight quantization bit width of the target network layer, to obtain the pseudo weight of the target network layer.

For example, after obtaining the target weight quantization hyperparameter and target weight quantization bit width, the target weight quantization hyperparameter and target weight quantization bit width can also be used to perform simulated quantification on the floating-point-type weight of the target network layer to obtain the pseudo weight of the target network layer, that is, to replace the floating-point-type weight of the target network layer with the pseudo weight of the target network layer. For the floating-point-type input feature of the target network layer, the target network layer processes the floating-point-type input feature of the target network layer through this pseudo weight to obtain the floating-point-type output feature of the target network layer, where the floating-point-type output feature is used as the floating-point-type input feature of the subsequent network layers.

For example, based on the target weight quantization hyperparameter and target weight quantization bit width, the following formula can be used to perform simulated quantification on the floating-point-type weight to obtain pseudo weight:

$$quant = 2^{-param} \times clip(round(data \times 2^{param}), -2^{bw-1}, 2^{bw-1} - 1).$$

Where *quant* is used to represent the pseudo weight of the target network layer, *param* is used to represent the target weight quantization hyperparameter of the target network layer, *data* is used to represent the floating-point-type weight of the target network layer, *bw* is used to represent the target weight quantization bit width of the target network layer, *clip* is used to represent the clipping function, and *round* is used to represent the rounding operation. Where due to the different ways of simulated quantization under different quantization algorithms, the above formula is only an example of simulated quantization.

For example, for each target network layer, after obtaining the target weight quantization hyperparameter and target weight quantization bit width of the target network layer, the target feature-value quantization bit width and target feature-value quantization hyperparameter of the target network layer can also be obtained. For example, the following steps can be taken to obtain the target feature-value quantization bit width and target feature-value quantization hyperparameter of the target network layer.

In step S19, for each target network layer in the sample decoding network, the quantization analysis module obtains a feature-value quantization hyperparameter candidate list and a quantization bit width set corresponding to the target network layer, where the feature-value quantization hyperparameter candidate list can include a plurality of candidate feature-value quantization hyperparameters, and the quantization bit width set can include at least two quantization bit widths.

Firstly, the quantization analysis module can determine a maximum feature value based on all floating-point-type input features of the target network layer; where each of the all floating-point-type input features includes a plurality of feature values, and the maximum feature value is a maximum value in all feature values of the all floating-point-type input features. For example, the target network layer can correspond to multiple floating-point-type input features (such as 100 sample bitstreams corresponding to 100 floating-point-type input features), and each floating-point-type input feature includes multiple feature values. For each floating-point-type input feature, the maximum value can be selected from all the feature values corresponding to that floating-point-type input feature, and then the maximum feature value can be selected from the maximum values corresponding to all floating-point-type input features. For example, assuming the target network layer is network layer l, the maximum feature value can be denoted as $max_l$ = max $(abs(f_{0\_l}), abs(f_{1\_l}), ..., abs(f_{n\_l})$, $abs(f_{0\_l})$ represents the maximum value corresponding to the first floating-point-type input feature of network layer l, and so on, $max_l$ represents the maximum feature value of all floating-point-type input features.

Then, the quantization analysis module generates the initial feature-value quantization hyperparameter corresponding to the target network layer based on the maximum feature value. For example, the following formula can be used to generate the initial feature-value quantization hyperparameter corresponding to the target network layer: $param = bw - 1 - ceil(log2(max))$; where param is used to represent the initial feature-value quantization hyperparameter corresponding to the target network layer, bw is used to represent the current quantization bit width, max is used to represent the maximum feature value, and ceil is used to represent the rounding up operation.

For example, the initial feature-value quantization hyperparameter corresponding to the target network layer is *param, param = get_param(bw, max)*, where *bw* is used to represent the quantization bit width corresponding to the target network layer. The quantization bit width corresponding to the target network layer is the current quantization bit width (i.e., the quantization bit width traversed from the current quantization bit width set). *param = get_param(bw, max)* represents the initial feature-value quantization hyperparameter calculated based on the data range max under the quantization bit width *bw*. Due to the different ways of calculating the initial feature-value quantization hyperparameter under different quantization algorithms, this is only an example of the initial feature-value quantization hyperparameter and is not limited to it.

Then, the quantization analysis module constructs a feature-value quantization hyperparameter candidate list based on the initial feature-value quantization hyperparameter. The feature-value quantization hyperparameter candidate list can include multiple candidate feature-value quantization hyperparameters corresponding to the target network layer. For example, considering that there are usually outliers in the feature values of a neural network (i.e., a value range of an outlier is usually very large), such outliers can affect quantization accuracy. Therefore, a feature-value quantization hyperparameter candidate list can be constructed based on the initial feature-value quantization hyperparameter. For example, an example of this feature-value quantization hyperparameter candidate list can be: $param_{l\_list}$ = [$param_l$ - 2, $param_l$ - 1, $param_l$, $param_l$ + 1, $param_l$ + 2]. The above is only an example of a feature-value quantization hyperparameter candidate list, and there is no restriction on the candidate feature-value quantization hyperparameters in the feature-value quantization hyperparameter candidate list. Taking the target network layer as network layer l as an example, $param_l$ represents the initial feature-value quantization hyperparameter corresponding to network layer l. The feature-value quantization hyperparameter candidate list includes five candidate feature-value quantization hyperparameters for network layer l.

The quantization analysis module can also generate a quantization bit width set, which can include at least two quantization bit widths. For example, the quantization bit width set can include two quantization bit widths, such as 8-bit, 16-bit, or 8-bit, 32-bit, or 16-bit, 32-bit, or 4-bit, 8-bit. For example, the quantization bit width set may include three quantization bit widths, such as 8-bit, 16-bit, 32-bit, or 4-bit, 8-bit, 16-bit, or 8-bit, 16-bit, 24-bit. For example, the quantization bit width set may include four quantization bit widths. The above are just a few examples of the quantization bit width set and are not limited to them.

In step S20, based on the order of quantization bit widths from small to large, the quantization analysis module traverses the quantization bit widths in the quantization bit width set. For each candidate feature-value quantization hyperparameter, the quantization analysis module performs simulated quantization on a floating-point-type input feature of the target network layer by the current quantization bit width and the candidate feature-value quantization hyperparameter to obtain a candidate input feature.

For example, based on the order of quantization bit widths from small to large, the quantization analysis module first takes the first quantization bit width as the current quantization bit width. For example, assuming that the quantization bit width set includes two quantization bit widths, such as 8-bit and 16-bit, the quantization analysis module first takes the 8-bit quantization bit width as the current quantization bit width, and performs step S20 based on the current quantization bit width.

For example, each candidate feature-value quantization hyperparameter in the feature-value quantization hyperparameter candidate list is traversed sequentially. For the currently traversed candidate feature-value quantization hyperparameter, a current quantization bit width and the candidate feature-value quantization hyperparameter can be used to perform simulated quantification on the floating-point-type input feature of the target network layer to obtain the candidate input feature corresponding to the candidate feature-value quantization hyperparameter. For example, simulated quantization is performed on the floating-point-type input feature of the target network layer to obtain the candidate input feature by a following formula: $quant = 2^{-param} \times clip(round(data \times 2^{param}), -2^{bw-1}, 2^{bw-1} - 1)$; where *quant* represents the candidate input feature, *param* represents the candidate feature-value quantization hyperparameter, *data* represents the floating-point-type input feature, *bw* represents the current quantization bit width, *clip* represents a clipping function, *round* represents a rounding operation. Due to the different ways of simulated quantization under different quantization algorithms, the above formula is only an example of simulated quantization.

In summary, for each candidate feature-value quantization hyperparameter, after substituting the candidate feature-value quantization hyperparameter *param* into the above formula, the candidate input feature *quant* corresponding to the candidate feature-value quantization hyperparameter can be obtained.

In step S21, after obtaining the candidate input feature, the quantization analysis module processes the candidate input feature of the target network layer based on the pseudo weight of the target network layer to obtain the floating-point-type output feature of the target network layer. The quantization analysis module determines the quantization error corresponding to the candidate feature-value quantization hyperparameter based on the floating-point-type output feature of the target network layer.

Firstly, for the floating-point-type input feature (the content of which can be found in step S16) of the target network layer, the current quantization bit width and candidate feature-value quantization hyperparameter have been used to perform simulated quantification on the floating-point-type input feature, to obtain the candidate input feature corresponding to the candidate feature-value quantization hyperparameter. The candidate input feature is then used as the input feature of the target network layer.

Then, the candidate input feature is processed based on a pseudo weight of the target network layer, to obtain a floating-point-type output feature of the target network layer. For example, if the target network layer is a convolutional layer, the candidate input feature is convolved based on the pseudo weight to obtain the floating-point-type output feature of the target network layer. If the target network layer is a pooling layer, the candidate input feature is pooled based on the pseudo weight to obtain the floating-point-type output feature of the target network layer. The above is just an example, and there is no limitation on this processing method, which is related to the function supported by the target network layer. Where after obtaining the target weight quantization hyperparameter and target weight quantization bit width corresponding to the target network layer, simulated quantification is performed on the floating-point-type weight of the target network layer, to obtain the pseudo weight. Therefore, the candidate input feature is processed based on the pseudo weight of the target network layer to obtain floating-point-type output feature.

Then, a quantization error corresponding to the candidate feature-value quantization hyperparameter is determined based on the floating-point-type output feature of the target network layer. For example, a sample output feature is determined based on the floating-point-type output feature of the target network layer, where the sample output feature is an output feature of a reference network layer in the sample decoding network, and the reference network layer is any one network layer located after the target network layer.

For example, taking the floating-point-type output feature of the target network layer as the input feature of the subsequent network layer (which still uses a floating-point-type weight), the subsequent network layer processes the input feature to obtain the floating-point-type output feature of the subsequent network layer. This process continues until the reference network layer in the sample decoding network processes the input feature to obtain the output feature of the reference network layer, where the output feature of the reference network layer is then used as the sample output feature.

Then, based on the sample output feature and reference output feature, the quantization error corresponding to the candidate value-feature quantization hyperparameter is determined. For example, based on the sample output feature and reference output feature, an error loss function can be used to determine the quantization error. The error loss function can include but is not limited to loss functions such as MSE, cosine similarity, KL divergence, etc., which is not limited.

The sample output feature can be the average of the sample output features corresponding to all sample bitstreams, and the reference output feature can be the average of the reference output features corresponding to all sample bitstreams. Alternatively, the sample output feature may be the maximum value of the sample output features corresponding to all sample bitstreams, and the reference output feature may be the maximum value of the reference output features corresponding to all sample bitstreams. Alternatively, the sample output feature can be the minimum value of the sample output features corresponding to all sample bitstreams, and the reference output feature can be the minimum value of the reference output features corresponding to all sample bitstreams, which is not limited.

In step S22, based on the quantization error corresponding to each candidate feature-value quantization hyperparameter, the quantization analysis module determines whether the minimum quantization error is less than a preset threshold (which can be configured based on experience). If so, step S23 is executed; if not, step S24 is executed.

In step S23, the quantization analysis module determines the candidate feature-value quantization hyperparameter corresponding to the minimum quantization error as the target feature-value quantization hyperparameter corresponding to the target network layer, and determines the current quantization bit width as the target feature-value quantization bit width corresponding to the target network layer, and records the target feature-value quantization hyperparameter and target feature-value quantization bit width for the target network layer.

At this point, the quantization analysis module can obtain the target feature-value quantization hyperparameter and target feature-value quantization bit width corresponding to the target network layer, and record the target feature-value quantization hyperparameter and target feature-value quantization bit width for the target network layer.

In step S24, the quantization analysis module determines whether the current quantization bit width is the last quantization bit width in the quantization bit width set.

If so, the candidate feature-value quantization hyperparameter corresponding to the minimum quantization error is determined as the target feature-value quantization hyperparameter corresponding to the target network layer, and determines the current quantization bit width as the target feature-value quantization bit width corresponding to the target network layer, and records the target feature-value quantization hyperparameter and target feature-value quantization bit width for the target network layer. This process can be referred to in step S23.

If not, the next quantization bit width after the current quantization bit width is used as the new current quantization bit width, and step S20 is returned. Based on the current quantization bit width, for each candidate feature-value quantization hyperparameter, the quantization analysis module performs simulated quantization on a floating-point-type input feature of the target network layer by the current quantization bit width and the candidate feature-value quantization hyperparameter to obtain a candidate input feature.

For example, in a first time, the quantization bit width of 8-bits is used as the current quantization bit width, and if the minimum quantization error is not less than the preset threshold, in a second time, the quantization bit width of 16-bits is used as the current quantization bit width, and the above steps are repeated, and so on.

For example, after recording the target feature-value quantization hyperparameter and target feature value quantization bit width for the target network layer, the quantization analysis module successfully obtains the target weight quantization hyperparameter, target weight quantization bit width, target feature-value quantization hyperparameter, and target feature value quantization bit width corresponding to the target network layer. At this point, the processing of the target network layer is completed, and the above steps are repeated for the next target network layer of the target network layer, and so on, until the target weight quantization hyperparameter, target weight quantization bit width, target feature-value quantization hyperparameter, and target feature value quantization bit width corresponding to each target network layer are obtained.

In step S25, after obtaining the target weight quantization hyperparameter, target weight quantization bit width, target feature-value quantization hyperparameter, and target feature value quantization bit width corresponding to each target network layer, the decoding network quantization module generates the target decoding network based on the sample decoding network. For example, for each target network layer in the sample decoding network, the decoding network quantization module performs fixed-point quantization on the floating-point-type weight of the target network layer based on the target weight quantization bit width and target weight quantization hyperparameter corresponding to the target network layer, to obtain the integer-type weight of the target network layer. After obtaining the integer-type weight of each target network layer, the decoding network quantization module can generate the target decoding network based on the integer-type weight of each target network layer.

For example, for each target network layer, the quantization analysis module can output the target weight quantization bit width and target weight quantization hyperparameter corresponding to the target network layer to the decoding network quantization module. The decoding network quantization module then performs fixed-point quantization on the floating-point-type weight of the target network layer based on the target weight quantization bit width and target weight quantization hyperparameter, to obtain the integer-type weight of the target network layer. There are no restrictions on the fixed-point quantization process of the floating-point-type weight.

For each target network layer, the quantization analysis module can also output the target feature-value quantization hyperparameter and target feature-value quantization bit width corresponding to the target network layer to the decoding network quantization module. The decoding network quantization module records the target feature-value quantization hyperparameter and target feature-value quantization bit width for the target network layer. For example, the decoding network quantization module can record the target feature-value quantization hyperparameter and target feature-value quantization bit width in the configuration information of the target network layer. When performing relevant processing in the target network layer, the target feature-value quantization hyperparameter and target feature-value quantization bit width can be read from the configuration information. Alternatively, the target feature-value quantization hyperparameter and the target feature-value quantization bit width can be recorded in other storage areas, as long as the target network layer can obtain the target feature-value quantization hyperparameter and the target feature-value quantization bit width.

After obtaining the integer-type weight of each target network layer, the floating-point-type weight of that target network layer can be replaced with the integer-type weight, so that all the replaced target network layers can form the target decoding network. At this point, the target decoding network has been successfully obtained and can be deployed to the encoder or decoder. For example, the target decoding network may include a probability hyperparameter decoding network, and a synthetic transform network. Alternatively, the target decoding network may include a mean prediction network, a probability hyperparameter decoding network, and a synthetic transform network. By deploying the target decoding network on the encoder, the encoder performs processing based on the target decoding network when implementing Embodiment 2. In addition, by deploying the target decoding network on the decoder, the decoder performs processing based on the target decoding network when implementing Embodiment 3.

Embodiment 7: referring to FIG. 6A, three modules have been added to the decoding network shown in FIG. 5A: bitstream extracting module, quantization analysis module, and decoding network quantization module. Referring to FIG. 6B, three modules have been added to the decoding network shown in FIG. 5B: bitstream extracting module, quantization analysis module, and decoding network quantization module. The sample decoding network can include multiple network layers using floating-point-type weights, and the multiple network layers can include the target network layer. The target network layer is a network layer that needs to use integer-type weight (that is, it needs to convert the floating-point-type weight of the target network layer into the integer-type weight). For example, all network layers in the sample decoding network can be used as the target network layer, or some network layers in the sample decoding network can be used as the target network layer, or all convolutional layers in the sample decoding network can be used as the target network layer.

For example, to convert the sample decoding network into a target decoding network with fixed-point-type weights, the following steps can be taken.

In step S31, the bitstream extracting module obtains a sample bitstream and inputs the sample bitstream to the quantization analysis module.

In step S32, the quantization analysis module receives the sample bitstream corresponding to each picture and stores the sample bitstream corresponding to each picture.

In step S33, the quantization analysis module decodes the sample feature from the sample bitstream, determines the floating-point-type input feature corresponding to the sample decoding network based on the sample feature, and determines the reference output feature corresponding to the sample feature based on the floating-point-type input feature. The reference output feature can be the output feature of the reference network layer in the sample decoding network. Where the reference network layer can be any one network layer in the sample decoding network, such as the last network layer in the sample decoding network, or the second to last network layer in the sample decoding network, or the last target network layer in the sample decoding network, or any one network layer located after the last target network layer in the sample decoding network, which is not limited.

For example, steps S31-S33 are similar to steps S11- S13, which will not be repeated here.

In step S34, for each target network layer in the sample decoding network, the quantization analysis module obtains a weight quantization hyperparameter candidate list corresponding to the target network layer. The weight quantization hyperparameter candidate list may include multiple candidate weight quantization hyperparameters.

Firstly, the quantization analysis module determines a maximum weight value based on all floating-point-type weights of the target network layer; where each of the all floating-point-type weights includes a plurality of weight values, and the maximum weight value is a maximum value in all weight values of the all floating-point-type weights. For example, the target network layer can include multiple floating-point-type weights, where each of the floating-point-type weights includes multiple weight values. For each floating-point-type weight, the maximum value can be selected from all weight values corresponding to that floating-point-type weight, and then the maximum weight value can be selected from the maximum values corresponding to all floating-point-type weights.

Then, the quantization analysis module generates the initial weight quantization hyperparameter corresponding to the target network layer based on the maximum weight value. For example, the following formula can be used to generate the initial weight quantization hyperparameter corresponding to the target network layer: $param = (max)/2^{bw-1}$; where param is used to represent the initial weight quantization hyperparameter corresponding to the target network layer, bw is used to represent the fixed quantization bit width, and max is used to represent the maximum weight value. For example, the initial weight quantization hyperparameter corresponding to the target network layer is $param$, $param = get\_param(bw, max)$, $bw$ is used to represent the quantization bit width corresponding to the target network layer. The quantization bit width corresponding to the target network layer can be a fixed quantization bit width, such as 4-bit, 8-bit, or 16-bit, etc. $param = get\_param(bw, max)$ represents the initial weight quantization hyperparameter calculated based on the data range $max$ under the quantization bit width $bw$. Due to the different ways of calculating the initial weight quantization hyperparameter under different quantization algorithms, here is an example of the initial weight quantization hyperparameter.

Then, the quantization analysis module constructs a weight quantization hyperparameter candidate list based on the initial weight quantization hyperparameters, where the weight quantization hyperparameter candidate list can include multiple candidate weight quantization hyperparameters corresponding to the target network layer. For example, considering that there are usually outliers in the weight values of a neural network. Therefore, a weight quantization hyperparameter candidate list can be constructed based on the initial weight quantization hyperparameter. For example, an example of this weight quantization hyperparameter candidate list can be:

$$param_{l\_list} = [\frac{param_l}{4}, \frac{3*param_l}{8}, \frac{param_l}{2}, \frac{5*param_l}{8}, \frac{3*param_l}{4}, \frac{7*param_l}{8}, param_l].$$

The above is only an example of a weight quantization hyperparameter candidate list, and there is no restriction on the candidate weight quantization hyperparameters in this weight quantization hyperparameter candidate list. Taking the target network layer as network layer l as an example, $param_l$ represents the initial weight quantization hyperparameter corresponding to network layer l. The weight quantization hyperparameter candidate list shows 7 candidate weight quantization hyperparameters corresponding to network layer l.

In step S35: for each candidate weight quantization hyperparameter, the quantization analysis module uses a fixed quantization bit width and the candidate weight quantization hyperparameter to perform simulated quantification on the floating-point-type weight of the target network layer to obtain the candidate simulated weight.

For example, the quantization bit width corresponding to the target network layer can be a fixed quantization bit width, which can be configured based on experience, which is not limited. For example, each candidate weight quantization hyperparameter in the weight quantization hyperparameter candidate list is traversed sequentially. For the currently traversed candidate weight quantization hyperparameter, a fixed quantization bit width and the candidate weight quantization hyperparameter can be used to perform simulated quantification on the floating-point-type weight of the target network layer to obtain the candidate simulated weight corresponding to the candidate weight quantization hyperparameter. For example, the following formula can be used to perform simulated quantification on the floating-point-type weight of the target network layer to obtain candidate simulated weight:

$$quant = param \times clip(round(data \div param), -2^{bw-1}, 2^{bw-1} - 1).$$

Where $quant$ is used to represent the candidate simulated weight, $param$ is used to represent the candidate weight quantization hyperparameter, $data$ is used to represent the floating-point-type weight of the target network layer, $bw$ is used to represent the fixed quantization bit width, $clip$ is used to represent the clipping function, $round$ is used to represent the rounding operation. Due to the different ways of simulated quantization under different quantization algorithms, the above formula is only an example of simulated quantization.

In summary, for each candidate weight quantization hyperparameter, after substituting the candidate weight quantization hyperparameter $param$ into the above formula, the candidate simulated weight $quant$ corresponding to the candidate weight quantization hyperparameter can be obtained.

In step S36, after obtaining the candidate simulated weight, the quantization analysis module processes the floating-point-type input feature of the target network layer based on the candidate simulated weight to obtain the floating-point-type output feature of the target network layer. The quantization analysis module determines the quantization error corresponding to the candidate weight quantization hyperparameter based on the floating-point-type output feature of the target network layer.

In step S37, based on the quantization error corresponding to each candidate weight quantization hyperparameter, the quantization analysis module determines the candidate weight quantization hyperparameter corresponding to the minimum quantization error as the target weight quantization hyperparameter corresponding to the target network layer, and determines the fixed quantization bit width as the target weight quantization bit width corresponding to the target network layer. At this point, the quantization analysis module can obtain the target weight quantization hyperparameter corresponding to the target network layer and the target weight quantization bit width corresponding to the target network layer.

For example, steps S36-S37 are similar to steps S16- S17, which will not be repeated here.

In step S38, the quantization analysis module performs simulated quantization on the floating-point-type weight of the target network layer by the target weight quantization hyperparameter of the target network layer and the target weight quantization bit width of the target network layer, to obtain the pseudo weight of the target network layer.

For example, after obtaining the target weight quantization hyperparameter and target weight quantization bit width, the target weight quantization hyperparameter and target weight quantization bit width can also be used to perform simulated quantification on the floating-point-type weight of the target network layer to obtain the pseudo weight of the target network layer. For the floating-point-type input feature of the target network layer, the target network layer processes the floating-point-type input feature of the target network layer through this pseudo weight to obtain the floating-point-type output feature of the target network layer, where the floating-point-type output feature is used as the floating-point-type input feature of the subsequent network layers. For example, the following formula can be used to perform simulated quantification on the floating-point-type weight to obtain the pseudo weight:

$$quant = param \times clip(round(data \div param), -2^{bw-1}, 2^{bw-1} - 1).$$

Where $quant$ is used to represent the pseudo weight of the target network layer, $param$ is used to represent the target weight quantization hyperparameter of the target network layer, $data$ is used to represent the floating-point-type weight of the target network layer, $bw$ is used to represent the target weight quantization bit width of the target network layer, $clip$ is used to represent the clipping function, and $round$ is used to represent the rounding operation. Where due to the different ways of simulated quantization under different quantization algorithms, the above formula is only an example of simulated quantization.

For example, for each target network layer, after obtaining the target weight quantization hyperparameter and target weight quantization bit width of the target network layer, the target feature-value quantization bit width and target feature-value quantization hyperparameter of the target network layer can also be obtained. For example, the following steps can be taken to obtain the target feature-value quantization bit width and target feature-value quantization hyperparameter of the target network layer:

In step S39, for each target network layer in the sample decoding network, the quantization analysis module obtains a feature-value quantization hyperparameter candidate list and a quantization bit width set corresponding to the target network layer, where the feature-value quantization hyperparameter candidate list can include a plurality of candidate feature-value quantization hyperparameters, and the quantization bit width set can include at least two quantization bit widths.

Firstly, the quantization analysis module can determine a maximum feature value based on all floating-point-type input features of the target network layer; where each of the all floating-point-type input features includes a plurality of feature values, and the maximum feature value is a maximum value in all feature values of the all floating-point-type input features. For example, the target network layer can correspond to multiple floating-point-type input features, and each floating-point-type input feature includes multiple feature values. For each floating-point-type input feature, the maximum value can be selected from all the feature values corresponding to that floating-point-type input feature, and then the maximum feature value can be selected from the maximum values corresponding to all floating-point-type input features.

Then, the quantization analysis module generates the initial feature-value quantization hyperparameter corresponding to the target network layer based on the maximum feature value. For example, using the following formula to generate the initial feature-value quantization hyperparameter corresponding to the target network layer: $param = (max)/2^{bw-1}$; where param is used to represent the initial feature-value quantization hyperparameter, bw is used to represent the fixed quantization bit width, and max is used to represent the maximum feature value. The initial feature-value quantization hyperparameter is $param$, $param = get\_param(bw, max)$, where $bw$ is used to represent the quantization bit width corresponding to the target network layer. The quantization bit width corresponding to the target network layer is the current quantization bit width (i.e., the quantization bit width traversed from the current quantization bit width set). $param = get\_param(bw, max)$ represents the initial feature-value quantization hyperparameter calculated based on the data range max under the quantization bit width $bw$. Due to the different ways of calculating the initial feature-value quantization hyperparameter under different quantization algorithms, this is only an example of the initial feature-value quantization hyperparameter and is not limited to it.

Then, the quantization analysis module constructs a feature-value quantization hyperparameter candidate list based on the initial feature-value quantization hyperparameter. The feature-value quantization hyperparameter candidate list can include multiple candidate feature-value quantization hyperparameters corresponding to the target network layer. For example, considering that there are usually outliers in the feature values of a neural network, such outliers can affect quantization accuracy. Therefore, the quantization analysis module can construct a feature-value quantization hyperparameter candidate list based on the initial feature-value quantization hyperparameter. For example, an example of this feature-value quantization hyperparameter candidate list can be:

$$param_{l\_list} = [\frac{param_l}{4}, \frac{3*param_l}{8}, \frac{param_l}{2}, \frac{5*param_l}{8}, \frac{3*param_l}{4}, \frac{7*param_l}{8}, param_l].$$

The above is only an example of the feature-value quantization hyperparameter candidate list, and there is no limitation on this feature-value quantization hyperparameter candidate list.

The quantization analysis module can also generate a quantization bit width set, which can include at least two quantization bit widths.

In step S40, based on the order of quantization bit widths from small to large, the quantization analysis module traverses the quantization bit widths in the quantization bit width set. For each candidate feature-value quantization hyperparameter, the quantization analysis module performs simulated quantization on a floating-point-type input feature of the target network layer by the current quantization bit width and the candidate feature-value quantization hyperparameter to obtain a candidate input feature.

For example, based on the order of quantization bit widths from small to large, the quantization analysis module first takes the first quantization bit width as the current quantization bit width. Each candidate feature-value quantization hyperparameter in the feature-value quantization hyperparameter candidate list is traversed sequentially. For the currently traversed candidate feature-value quantization hyperparameter, a current quantization bit width and the candidate feature-value quantization hyperparameter can be used to perform simulated quantification on the floating-point-type input feature of the target network layer to obtain the candidate input feature corresponding to the candidate feature-value quantization hyperparameter. For example, simulated quantization is performed on the floating-point-type input feature of the target network layer to obtain the candidate input feature by a following formula:

$$quant = param \times clip(round(data \div param), -2^{bw-1}, 2^{bw-1} - 1);$$

Where *quant* represents the candidate input feature, *param* represents the candidate feature-value quantization hyperparameter, *data* represents the floating-point-type input feature, *bw* represents the current quantization bit width, *clip* represents a clipping function, *round* represents a rounding operation. Due to the different ways of simulated quantization under different quantization algorithms, the above formula is only an example of simulated quantization.

In summary, for each candidate feature-value quantization hyperparameter, after substituting the candidate feature-value quantization hyperparameter *param* into the above formula, the candidate input feature *quant* corresponding to the candidate feature-value quantization hyperparameter can be obtained.

In step S41, after obtaining the candidate input feature, the quantization analysis module processes the candidate input feature of the target network layer based on the pseudo weight of the target network layer to obtain the floating-point-type output feature of the target network layer. The quantization analysis module determines the quantization error corresponding to the candidate feature-value quantization hyperparameter based on the floating-point-type output feature of the target network layer.

In step S42, based on the quantization error corresponding to each candidate feature-value quantization hyperparameter, the quantization analysis module determines whether the minimum quantization error is less than a preset threshold (which can be configured based on experience). If so, step S43 is executed; if not, step S44 is executed.

In step S43, the quantization analysis module determines the candidate feature-value quantization hyperparameter corresponding to the minimum quantization error as the target feature-value quantization hyperparameter corresponding to the target network layer, and determines the current quantization bit width as the target feature-value quantization bit width corresponding to the target network layer, and records the target feature-value quantization hyperparameter and target feature-value quantization bit width for the target network layer.

In step S44, the quantization analysis module determines whether the current quantization bit width is the last quantization bit width in the quantization bit width set.

If so, the candidate feature-value quantization hyperparameter corresponding to the minimum quantization error is determined as the target feature-value quantization hyperparameter corresponding to the target network layer, and determines the current quantization bit width as the target feature-value quantization bit width corresponding to the target network layer, and records the target feature-value quantization hyperparameter and target feature-value quantization bit width for the target network layer. This process can be referred to in step S43.

If not, the next quantization bit width after the current quantization bit width is used as the new current quantization bit width, and step S40 is returned. Based on the current quantization bit width, for each candidate feature-value quantization hyperparameter, the quantization analysis module performs simulated quantization on a floating-point-type input feature of the target network layer by the current quantization bit width and the candidate feature-value quantization hyperparameter to obtain a candidate input feature.

In step S45, after obtaining the target weight quantization hyperparameter, target weight quantization bit width, target feature-value quantization hyperparameter, and target feature value quantization bit width corresponding to each target network layer, the decoding network quantization module generates the target decoding network based on the sample decoding network. For example, for each target network layer in the sample decoding network, the decoding network quantization module performs fixed-point quantization on the floating-point-type weight of the target network layer based on the target weight quantization bit width and target weight quantization hyperparameter corresponding to the target network layer, to obtain the integer-type weight of the target network layer. After obtaining the integer-type weight of each target network layer, the decoding network quantization module can generate the target decoding network based on the integer-type weight of each target network layer.

For example, steps S41-S45 are similar to steps S21- S25, which will not be repeated here.

After obtaining the integer-type weight of each target network layer, the floating-point-type weight of that target network layer can be replaced with the integer-type weight, so that all the replaced target network layers can form the target decoding network. At this point, the target decoding network has been successfully obtained and can be deployed to the encoder or decoder. For example, the target decoding network may include a probability hyperparameter decoding network, and a synthetic transform network. Alternatively, the target decoding network may include a mean prediction network, a probability hyperparameter decoding network, and a synthetic transform network. By deploying the target decoding network on the encoder, the encoder performs processing based on the target decoding network when implementing Embodiment 2. In addition, by deploying the target decoding network on the decoder, the decoder performs processing based on the target decoding network when implementing Embodiment 3.

Embodiment 8: a decoder based on a neural network has different sensitivity to quantization in each network layer of the neural network when decoding the bitstream. Some network layers can maintain quantization performance at lower bits, and some network layers require higher bits to ensure quantization accuracy. This is related to the parameters and feature distributions learned by the neural network. Therefore, when using a more user-friendly PTQ (Post-Training Quantization), in order to achieve maximum compression of the model bit width and ensuring the performance of the compressed model and allowing the compressed model to be used on the vast majority of devices, this embodiment proposes an efficient decoder compression and inference method, which mainly includes the following steps: 1. Collecting several pictures (such as 100-200 pictures) in real scenes (application scenarios of picture acquisition devices). 2. The pictures are inputted into the encoding network to extract the bitstreams (i.e., the first bitstream and the second bitstream) to be transmitted to the decoding network, for storing. 3. The stored bitstreams are transmitted to the quantization analysis module for obtaining the appropriate quantization bit width and the quantization parameter (such as the quantization hyperparameter) for each network layer of the decoding network. 4. Based on the quantization bit width and the quantization parameter of each network layer obtained by the quantization analysis module, each network layer of the decoding network is quantized to obtain the final quantization model, which quantifies each network layer of the sample decoding network to obtain the target decoding network.

On the basis of the decoding network shown in FIG. 5A or FIG. 5B, a bitstream extracting module, a quantization analysis module, and a decoding network quantization module can be added. The following describes the functions of the bitstream extracting module, the quantization analysis module, and the decoding network quantization module.

The bitstream extracting module is configured to collect several pictures (such as 100-200 pictures) in real scenes (application scenarios of picture acquisition devices), input the pictures into the encoding network for forward calculation, and extract the output (i.e., the bitstreams used for transmission to the decoding network, namely the first bitstream and the second bitstream) of the encoding network, and store the bitstream corresponding to each picture.

The quantization analysis module: the bitstream information extracted by the bitstream extracting module is inputted into the quantization analysis module. The function of the quantization analysis module is to analyze the sensitivity of each network layer of the decoding network to quantization, and obtain the quantization bit width that should be allocated to each network layer of the decoding network while ensuring decoding performance, that is, to obtain the quantization bit width of each network layer of the decoding network.

A forward calculation result of the decoding network is stored in the quantization analysis module. For example, after a bitstream entering the decoding network, a full-precision floating-point data type decoding forward pass is first performed. During this process, the input feature ($f_{i\_l}$, where $i$ represents the $i$-th bitstream, $l$ represents the $l$-th network layer) of each network layer, and the output feature ($f_{i\_o}$, where $i$ represents the $i$-th bitstream) of the last layer in the decoding network under floating point are stored. The output feature of the last layer serves as the reference output feature in the above embodiments.

The quantization analysis module also supports simulated quantization on the weight and the input feature value of each network layer in the decoding network, and can perform simulated quantization calculation to simulate the quantization inference of the decoding network. Where in the decoding network, the weights of network layers (such as convolutional layers) are not sensitive to quantization at 8-bits, and the input feature values of network layers (such as convolutional layers) are more sensitive to quantization. Therefore, using 8-bit quantization in some network layers can meet the performance loss, but some network layers may be difficult to meet the quantization performance loss. Therefore, the quantization analysis module mainly analyzes the quantization of the input feature values of the network layers (such as convolutional layers) of the decoding network, and selects appropriate quantization bit width and hyperparameter for the input of each network layer in the decoding network.

The quantization analysis module initializes the quantization hyperparameter for the input feature value of each network layer in the decoding network. The initialization of the quantization hyperparameter depends on the data range of the floating-point feature, where the data range is obtained by statistical analysis of the input feature ($f_{i\_l}$, $i$ represents the $i$-th bitstream, and $l$ represents the $l$-th network layer) of each network layer in the floating-point-type decoding network, i.e., $max_l$ = max ($abs(f_{0\_l})$, $abs(f_{1\_l})$, ... , $abs(f_{n\_l})$). The initialized quantization hyperparameter is obtained by the calculation formula: $param_l$ = get_param($bw_l$, $max_l$), $bw_l$ represents the bit width of the input feature at the $l$-th layer, initialized to 8, represents the quantization hyperparameter calculated based on the data range max under the quantization bit width bw. Due to the different ways of calculating the quantization hyperparameter under different quantization algorithms. One example is given here: $param = bw - 1 - ceil(log2(max))$. Considering that there are usually outliers (which is abnormal feature value, with particularly large numerical ranges) in the feature values of the neural network, these outliers can greatly affect the quantization accuracy. Therefore, a candidate list of hyperparameters is set based on the initialized quantization hyperparameter, i.e., $param_{l\_list}$ = [$param_l$ - 2, $param_l$ - 1, $param_l$, $param_l$ + 1, $param_l$ + 2]. In addition, another example of calculating the quantization hyperparameter can be: $param = (max)/2^{bw-1}$, based on initialized quantization hyperparameter, the candidate list for setting hyperparameters is:

$$param_{l\_list} = [\frac{param_l}{4}, \frac{3*param_l}{8}, \frac{param_l}{2}, \frac{5*param_l}{8}, \frac{3*param_l}{4}, \frac{7*param_l}{8}, param_l].$$

The quantization analysis module will analyze the quantization of the decoding network layer by layer. The analysis method is to perform simulated quantization on the input feature values layer by layer (such as initially performing 8-bit quantization), input the simulated quantized features to the network for forward calculation, save the output of the decoding network, and perform error analysis with the pre-saved floating-point-type output feature $f_{i\_o}$. When the error is greater than a certain threshold, the quantization bit width of that layer will be increased to 16-bits. The calculation formula for simulated quantization can be: $data_q = quant(data_f, bw, param)$. The calculation formula for simulated quantization is not different under different quantization algorithms. One example of simulated quantization method is given here: $quant(data_f, bw, param) = 2^{-param} \times clip(round(data_f \times 2^{param}), -2^{bw-1}, 2^{bw-1} - 1)$, where $clip$ is used to represent the clipping function. In addition, another example of simulated quantization method can be: $quant(data_f, bw, param) = param \times clip(round(data_f \div param), -2^{bw-1}, 2^{bw-1} - 1)$.

In an embodiment, the following steps can be taken to calculate the quantization hyperparameter and the quantization bit widths for the feature value:

initializing the quantization bit width, such as setting the initial value of the quantization bit width to 8-bits;

initializing the quantization hyperparameter, such as using the following formula to determine the initial value of the quantization hyperparameter: $param = bw - 1 - ceil(log2(max))$, the initial value of the quantization hyperparameter is the initial feature-value quantization hyperparameter in the above embodiments;

initializing the quantization error, such as setting a preset threshold for the quantization error, where the preset threshold can be set based on experience;

obtaining the quantization hyperparameter candidate list, such as based on the initial values of quantization hyperparameters, using the following formula to obtain the quantization hyperparameter candidate list: $param_{l\_list} = [param_l - 2, param_l - 1, param_l, param_l + 1, param_l + 2]$;

performing simulated quantization on the input feature value, such as based on quantization bit width and quantization hyperparameter, using the following formula for simulated quantization:

$$quant(data_f, bw, param) = 2^{-param} \times clip(round(data_f \times 2^{param}), -2^{bw-1}, 2^{bw-1} - 1);$$

inputting the quantized simulated feature value into the decoding network for forward computation;

calculating the quantization error between the output of the simulation quantized decoding network and the output of the floating-point-type decoding network;

if the quantization error is less than the preset threshold, outputting the quantization bit width of the feature value as 8-bits, and outputting the quantization hyperparameter of the feature value as the quantization hyperparameter corresponding to the minimum quantization error (i.e., one of the quantization hyperparameters in the quantization hyperparameter candidate list).

if the quantization error is not less than the preset threshold, increasing the quantization bit width to 16-bits.

re-obtaining the initial value of the quantization hyperparameter, i.e., when using the above formula to obtain the initial value of the quantization hyperparameter, modifying the quantization bit width bw from 8-bits to 16-bits, and obtaining the initial value of the quantization hyperparameter under the 16-bits.

re-obtaining the quantization hyperparameter candidate list, such as obtaining the quantization hyperparameter candidate list based on the initial value of the quantization parameter.

performing simulated quantization on the input feature value, such as using the above formula for simulated quantization.

inputting the quantized simulated feature value into the decoding network for forward computation;

calculating the quantization error between the output of the simulation quantized decoding network and the output of the floating-point-type decoding network;

outputting the quantization bit width of the feature value as 16-bits, and outputting the quantization hyperparameter of the feature value as the quantization hyperparameter corresponding to the minimum quantization error.

In the above process, when calculating the quantization error, an error loss function can be used to calculate the quantization error. The calculation method of the error loss function can include but is not limited to MSE, cosine similarity, KL divergence, etc. After the above calculation, the quantization bit width $bw_l$ and quantization hyperparameter $param_l$ for the input of each network layer of the decoding network can be obtained.

The decoding network quantization module: based on the quantization bit width $bw_l$ and quantization hyperparameter $param_l$ output by the quantization analysis module for the input of each network layer, and the fixed 8-bit quantization bit width for the weight of each network layer, the decoding network quantization module can quantize the decoding network. For example, the weight parameter of the decoding network undergoes 8-bit quantization, which can greatly compress the storage space of the model. The quantization module of the decoding network labels the input of each network layer with bit width information (8-bit or 16-bit), and writing the corresponding quantization hyperparameter into the calculation process (usually represented as shift) of the network layer, which can further compress the computational load and throughput bandwidth of the model and ensure the decoding quality of the decoding network.

Embodiment 9: after obtaining the target decoding network, the target decoding network can be deployed to the encoder or decoder. For example, the target decoding network may include a probability hyperparameter decoding network, and a synthetic transform network. Alternatively, the target decoding network may include a mean prediction network, a probability hyperparameter decoding network, and a synthetic transform network. By deploying the target decoding network on the encoder, the encoder performs processing based on the target decoding network when implementing Embodiment 2. By deploying these target decoding networks on the decoder, the decoder performs processing based on the target decoding network when implementing Embodiment 3.

In an embodiment, the encoder or decoder can decode the target feature corresponding to the current picture block from the corresponding bitstream (such as the first bitstream and the second bitstream), determine the input feature of the decoding network based on the target feature, process the input feature based on the decoding network, to obtain the output feature of the decoding network. After obtaining the output feature, the reconstructed picture block corresponding to the current picture block can be determined based on the output feature. The following describes this process.

For example, the encoder or decoder decodes the target feature corresponding to the current picture block from the bitstream corresponding to the current picture block, and determines the first input feature of the target decoding network based on the target feature. The target feature-value quantization bit width and target feature-value quantization hyperparameter of the target decoding network is obtained (such as obtaining the target feature-value quantization bit width and target feature-value quantization hyperparameter from the configuration information of the target decoding network), and the first input feature is converted into a second input feature based on the target feature-value quantization bit width and target feature-value quantization hyperparameter. Based on the integer-type weight (which can be determined based on the target weight quantization bit width and target weight quantization hyperparameter) of the target decoding network, the second input feature is processed to obtain the output feature of the target decoding network. The reconstructed picture block corresponding to the current picture block is constructed based on the output feature of the target decoding network.

For example, the target decoding network includes at least one target network layer, which may be a network layer using an integer-type weight. For each target network layer in the target decoding network, the first input feature of the target network layer is converted into a second input feature based on the target feature-value quantization bit width and target feature-value quantization hyperparameter of the target network layer, and the second input feature is processed based on the integer-type weight (where the integer-type weight of the target network layer is determined based on the target weight quantization bit width and the target weight quantization hyperparameter of the target network layer) of the target network layer to obtain the output feature of the target network layer. Where target feature-value quantization bit widths in different target network layers are same or different, target feature-value quantization hyperparameters in different target network layers are same or different, target weight quantization bit widths in different target network layers share a fixed bit width, target weight quantization hyperparameters in different target network layers are same or different.

For example, converting the first input feature of the target network layer into the second input feature of the target network layer based on the target feature-value quantization bit width and the target feature-value quantization hyperparameter of the target network layer includes: converting the first input feature of the target network layer into the second input feature of the target network layer through a following formula: $quant = clip(round(data \times 2^{param}), -2^{bw-1}, 2^{bw-1} - 1)$ ; or $quant = clip(round(data \div param), -2^{bw-1}, 2^{bw-1} - 1)$; where $quant$ represents the second input feature of the target network layer, $data$ represents the first input feature of the target network layer, $param$ represents the target feature-value quantization hyperparameter in the target network layer, $bw$ represents the target feature-value quantization bit width of the target network layer, $clip$ represents a clipping function, $round$ represents a rounding operation.

As shown in FIG. 5A, after obtaining Bitstream#1 (i.e., the first bitstream) corresponding to the current picture block, the encoder or decoder can decode Bitstream#1 to obtain the hyperparameter quantization feature (i.e., the target feature of the current picture block), inverse quantize the hyperparameter quantization feature, to obtain coefficient hyperparameter feature z_ hat (i.e., the first input feature of the probability hyperparameter decoding network determined based on the target feature). Alternatively, Bitstream#1 can be decoded to obtain the coefficient hyperparameter feature z_hat (i.e., the target feature of the current picture block, where the target feature is directly used as the first input feature of the probability hyperparameter decoding network).

After obtaining the coefficient hyperparameter feature z_hat (i.e., the first input feature of the probability hyperparameter decoding network), the coefficient hyperparameter feature z_hat is input to the probability hyperparameter decoding network (i.e., the target decoding network). The probability hyperparameter decoding network can use the target feature value quantization bit width and target feature-value quantization hyperparameter to convert the floating-point-type coefficient hyperparameter feature z_hat (i.e., the first input feature) into an integer-type coefficient hyperparameter feature z_hat (i.e., the second input feature), perform coefficient hyperparameter feature inverse transform on the integer-type coefficient hyperparameter feature z_hat, and obtain the probability distribution parameter p (i.e., the output feature of the probability hyperparameter decoding network) corresponding to the current picture block. After the probability distribution parameter p is obtained, a probability distribution model can be generated based on the probability distribution parameter p.

For example, for each target network layer in a probability hyperparameter decoding network, after obtaining the floating-point-type first input feature, the target network layer can convert the floating-point-type first input feature into an integer-type second input feature based on the target feature-value quantization bit width and target feature-value quantization hyperparameter of the target network layer. Since the target network layer uses integer-type weight, the second input feature of the integer can be processed based on the integer-type weight of the target network layer to obtain the output feature of the target network layer. Where the output feature of the target network layer can serve as the input feature for the subsequent network layer, and the output feature of the target network layer can be the floating-point-type feature, and so on.

As shown in FIG. 5A, After obtaining the Bitstream#2 (i.e., the second bitstream) corresponding to the current picture block, the encoder or decoder decodes the Bitstream#2 to obtain the picture quantization feature (i.e., the target feature of the current picture block), perform inverse quantization on the picture quantization feature to obtain the picture feature s', perform feature restoration on the picture feature s', to obtain the picture feature y_hat (i.e., determine the first input feature of the synthesis transform network based on the target feature). Alternatively, Bitstream#2 can be decoded to obtain the picture feature *s'* (i.e., the target feature of the current picture block). The picture feature s' can be restored to obtain the picture feature y_hat (i.e., the first input feature of the synthesis transform network is determined based on the target feature). When decoding Bitstream#2, the encoder or decoder can decode Bitstream#2 based on a probability distribution model, and this process will not be repeated.

After obtaining the picture feature y_hat (i.e., the first input feature of the synthesis transform network), the picture feature y_hat is input to the synthesis transform network (i.e., the target decoding network). The synthetic transform network can use target feature-value quantization bit width and target feature-value quantization hyperparameter to convert the floating-point-type picture feature y_hat (i.e., the first input feature) into the integer-type picture feature y_hat (i.e., the second input feature), perform synthetic transform on the integer-type picture feature y_hat, to obtain the reconstructed picture block x_hat (i.e., the output feature of the synthetic transform network) corresponding to the current picture block x. From the above, it can be seen that synthetic transform is performed on the picture feature y_hat based on the synthetic transform network to obtain the reconstructed picture block x_hat corresponding to the current picture block x.

For example, for each target network layer in a synthetic transform network, after obtaining the floating-point-type first input feature, the target network layer can convert the floating-point-type first input feature into an integer-type second input feature based on the target feature-value quantization bit width and target feature-value quantization hyperparameter of the target network layer. Since the target network layer uses integer-type weight, the second input feature of the integer can be processed based on the integer-type weight of the target network layer to obtain the output feature of the target network layer. Where the output feature of the target network layer can serve as the input feature for the subsequent network layer, and the output feature of the target network layer can be the floating-point-type feature, and so on.

After obtaining the output feature of the synthetic transform network, the output feature of the synthetic transform network can be used as the reconstructed picture block x_hat corresponding to the current picture block x, that is, based on this output feature, the reconstructed picture block x_hat corresponding to the current picture block x can be determined.

As shown in FIG. 5B, after obtaining the Bitstream#1 corresponding to the current picture block, the encoder or decoder can decode Bitstream#1 to obtain the hyperparameter quantization feature (i.e., the target feature of the current picture block), inverse quantize the hyperparameter quantization feature, to obtain the coefficient hyperparameter feature z_ hat (i.e., the first input feature of the probability hyperparameter decoding network determined based on the target feature). Alternatively, Bitstream#1 can be decoded to obtain the coefficient hyperparameter feature z_hat (i.e., the target feature of the current picture block, where the target feature is directly used as the first input feature of the probability hyperparameter decoding network).

After obtaining the coefficient hyperparameter feature z_hat (i.e., the first input feature of the probability hyperparameter decoding network), the coefficient hyperparameter feature z_hat is input to the probability hyperparameter decoding network (i.e., the target decoding network). The probability hyperparameter decoding network can use the target feature value quantization bit width and target feature-value quantization hyperparameter to convert the floating-point-type coefficient hyperparameter feature z_hat (i.e., the first input feature) into an integer-type coefficient hyperparameter feature z_hat (i.e., the second input feature), perform coefficient hyperparameter feature inverse transform on the integer-type coefficient hyperparameter feature z_hat, and obtain the probability distribution parameter p (i.e., the output feature of the probability hyperparameter decoding network) corresponding to the current picture block.

For example, for each target network layer in a probability hyperparameter decoding network, after obtaining the floating-point-type first input feature, the target network layer converts the floating-point-type first input feature into an integer-type second input feature based on the target feature-value quantization bit width and target feature-value quantization hyperparameter of the target network layer. Since the target network layer uses integer-type weight, the second input feature of the integer can be processed based on the integer-type weight of the target network layer to obtain the output feature of the target network layer.

After obtaining the coefficient hyperparameter feature z_hat (i.e., the first input feature of the mean prediction network), the coefficient hyperparameter feature z_hat and the picture feature y_hat of the previous picture block are input to the mean prediction network (i.e., the target decoding network). The mean prediction network uses the target feature value quantization bit width and target feature-value quantization hyperparameter to convert the floating-point coefficient hyperparameter feature z_hat (first input feature) into an integer-type coefficient hyperparameter feature z_hat (second input feature), and uses the target feature value quantization bit width and target feature-value quantization hyperparameter to convert the floating-point-type picture feature y_hat (first input feature) into an integer-type picture feature y_hat (second input feature). The mean prediction network performs context-based prediction based on the integer-type coefficient hyperparameter feature z_hat and the integer-type picture feature y_hat, to obtain the predicted value mu corresponding to the current picture block (i.e., the output feature of the mean prediction network).

For example, for each target network layer in a mean prediction network, after obtaining the floating-point-type first input feature, the target network layer converts the floating-point-type first input feature into an integer-type second input feature based on the target feature-value quantization bit width and target feature-value quantization hyperparameter of the target network layer. Since the target network layer uses integer-type weight, the second input feature of the integer can be processed based on the integer-type weight of the target network layer to obtain the output feature of the target network layer.

After obtaining the corresponding Bitstream#2 for the current picture block, the encoder or decoder can also decode Bitstream#2 to obtain picture quantization feature (i.e., the target feature of the current picture block), perform inverse quantization on the picture quantization feature to obtain picture feature s', perform feature restoration (i.e., residual restoration) on the picture feature s', to obtain the residual feature r_hat, and determine picture feature y_hat based on the residual feature r_hat and predicted value mu. For example, the sum of the residual feature r_hat and predicted value mu is used as the picture feature y_hat (i.e., the input feature of the synthesis transform network is determined based on the target feature). Alternatively, Bitstream#2 is decoded to obtain the picture feature s' (i.e., the target feature of the current picture block), perform feature restoration on the picture feature s' to obtain the residual feature r_hat, and determine the picture feature y_hat based on the residual feature r_hat and the predicted value mu. For example, the sum of the residual feature r_hat and the predicted value mu can be used as the picture feature y_hat (i.e., the input feature of the synthesis transform network is determined based on the target feature).

After obtaining the picture feature y_hat (i.e., the first input feature of the synthesis transform network), the picture feature y_hat is input to the synthesis transform network (i.e., the target decoding network). The synthetic transform network can use target feature-value quantization bit width and target feature-value quantization hyperparameter to convert the floating-point-type picture feature y_hat (i.e., the first input feature) into the integer-type picture feature y_hat (i.e., the second input feature), perform synthetic transform on the integer-type picture feature y_hat, to obtain the reconstructed picture block x_hat (i.e., the output feature of the synthetic transform network) corresponding to the current picture block x. From the above, it can be seen that synthetic transform is performed on the picture feature y_hat based on the synthetic transform network to obtain the reconstructed picture block x_hat corresponding to the current picture block x.

For example, for each target network layer in a synthetic transform network, after obtaining the floating-point-type first input feature, the target network layer can convert the floating-point-type first input feature into an integer-type second input feature based on the target feature-value quantization bit width and target feature-value quantization hyperparameter of the target network layer. Since the target network layer uses integer-type weight, the second input feature of the integer can be processed based on the integer-type weight of the target network layer to obtain the output feature of the target network layer. Where the output feature of the target network layer can serve as the input feature for the subsequent network layer, and the output feature of the target network layer can be the floating-point-type feature, and so on.

After obtaining the output feature of the synthetic transform network, the output feature of the synthetic transform network can be used as the reconstructed picture block x_hat corresponding to the current picture block x, that is, based on this output feature, the reconstructed picture block x_hat corresponding to the current picture block x can be determined.

From the above technical solutions, it can be seen that in the embodiments of the present disclosure, an end-to-end video picture compression method is proposed, which can decode video pictures based on a decoding network, achieving the goal of improving encoding efficiency and decoding efficiency. A decoding network with fixed-point-type weight(s) is constructed using the target weight quantization bit width(s) and target weight quantization hyperparameter(s). Target feature-value quantization bit width(s) and target feature-value quantization hyperparameter(s) are used to generate fixed-point-type input features, achieving adaptive decoding acceleration and reducing decoding computation while ensuring decoding quality. A compression method for the decoding network in a neural network-based image encoding and decoding framework is proposed. By analyzing the quantization loss of each layer of the decoding network when performing decoding calculation of the input bitstream, the quantization bit width and quantization hyperparameter of each layer are determined. Based on the obtained quantization bit width and quantization hyperparameter, the decoding network is quantized, which can ensure the decoding quality of the decoding network and greatly compress the storage space, computational complexity, model throughput, and bandwidth of the decoding network, making it possible for a large decoding network to operate on devices with limited computing resources. Changing the inference of the decoding network from floating-point calculation to fixed-point calculation helps to improve the decoding consistency of the decoding network across different devices.

The above embodiments can be implemented separately or in combination. For example, each of embodiments 1-9 can be implemented separately, and at least two of embodiments 1-9 can be implemented in combination.

For example, in the above embodiments, the content of the encoder can also be applied to the decoder, that is, the decoder can process in the same way, and the content of the decoder can also be applied to the encoder, that is, the encoder can process in the same way.

Based on the same application concept as the above method, the embodiments of the present disclosure further provide a decoding device. The device is applied to the decoder. The device includes: one or more memories configured to store video data; and a decoder configured to implement the decoding method in embodiments 1-9, namely the processing flow of the decoder.

For example, in an embodiment, a decoder is configured to achieve:

decoding a target feature corresponding to a current picture block from a bitstream corresponding to the current picture block;

determining a first input feature of a target decoding network based on the target feature;

obtaining a target feature-value quantization bit width and a target feature-value quantization hyperparameter of the target decoding network, and converting a first input feature into a second input feature based on the target feature-value quantization bit width and the target feature-value quantization hyperparameter;

process the second input feature based on an integer-type weight of the target decoding network to obtain an output feature of the target decoding network; where integer-type weight is determined based on the target weight quantization bit width and the target weight quantization hyperparameter.

determining a reconstructed picture block corresponding to the current picture block based on the output feature of the target decoding network.

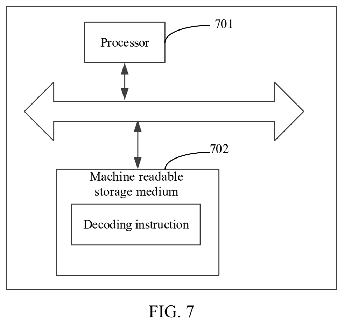

Based on the same application concept as the above methods, a decoding device (also referred to as a video decoder) provided in the embodiments of the present disclosure has, from a hardware perspective, a hardware architecture, as shown in FIG. 7. The hardware architecture includes processor 701 and machine-readable storage medium 702, where machine-readable storage medium 702 stores machine executable instructions that can be executed by processor 701. Processor 701 is configured to execute machine executable instructions to implement the decoding methods of embodiments 1-9 in the present disclosure.

For example, in an embodiment, the decoding device is configured to implement:

decoding a target feature corresponding to a current picture block from a bitstream corresponding to the current picture block;

determining a first input feature of a target decoding network based on the target feature;

obtaining a target feature-value quantization bit width and a target feature-value quantization hyperparameter of the target decoding network, and converting a first input feature into a second input feature based on the target feature-value quantization bit width and the target feature-value quantization hyperparameter;

process the second input feature based on an integer-type weight of the target decoding network to obtain an output feature of the target decoding network; where integer-type weight is determined based on the target weight quantization bit width and the target weight quantization hyperparameter.

determining a reconstructed picture block corresponding to the current picture block based on the output feature of the target decoding network.

Based on the same application concept as the above methods, the embodiments of the present disclosure provide an electronic device. The electronic device includes processor and machine-readable storage medium, where machine-readable storage medium stores machine executable instructions that can be executed by processor; the processor is configured to execute machine executable instructions to implement the decoding method of embodiments 1-9 in the present disclosure.

Based on the same application concept as the above methods, the embodiments of the present disclosure further provide a machine-readable storage medium, which stores several computer instructions. When the computer instructions are executed by a processor, the methods in the embodiments of the present disclosure can be implemented, such as the decoding method in the above embodiments.

Based on the same application concept as the above methods, the embodiments of the present disclosure further provide a computer application program that, when executed by a processor, the decoding method in the embodiments of the present disclosure are implemented.

In the embodiments of the present disclosure, a decoding apparatus is also proposed, which can be applied to the decoder. The decoding apparatus may include: a decoding module, configured to decode a target feature corresponding to the current picture block from the bitstream corresponding to the current picture block; a determining module, configured to determine the first input feature of the target decoding network based on the target feature; a processing module, configured to obtain a target feature-value quantization bit width and a target feature-value quantization hyperparameter of the target decoding network, and convert the first input feature of the target decoding network into a second input feature of the target decoding network based on the target feature-value quantization bit width and the target feature-value quantization hyperparameter; process the second input feature of the target decoding network based on an integer-type weight of the target decoding network to obtain an output feature of the target decoding network; where the integer-type weight of the target decoding network is determined based on a target weight quantization bit width and a target weight quantization hyperparameter of the target decoding network; and a determining module, configured to determine the reconstructed picture block corresponding to the current picture block based on the output feature of the target decoding network.

For example, the target decoding network includes at least one target network layer, which may be a network layer using an integer-type weight. For each target network layer in the target decoding network, the processing module is configured to convert the first input feature of the target network layer into a second input feature based on the target feature-value quantization bit width and target feature-value quantization hyperparameter of the target network layer, and process the second input feature based on the integer-type weight of the target network layer to obtain the output feature of the target network layer; where the integer-type weight of the target network layer is determined based on the target weight quantization bit width of the target network layer and the target weight quantization hyperparameter of the target network layer; where target feature-value quantization bit widths in different target network layers are same or different, target feature-value quantization hyperparameters in different target network layers are same or different, target weight quantization bit widths in different target network layers share a fixed bit width, target weight quantization hyperparameters in different target network layers are same or different.

For example, when converting the first input feature of the target network layer into the second input feature of the target network layer based on the target feature-value quantization bit width and the target feature-value quantization hyperparameter of the target network layer, the processing module is configured to: convert the first input feature of the target network layer into the second input feature of the target network layer through a following formula: $quant = clip(round(data \times 2^{param}), -2^{bw-1}, 2^{bw-1} - 1)$; or $quant = clip(round(data \div param), -2^{bw-1}, 2^{bw-1} - 1)$; where $quant$ represents the second input feature of the target network layer, $data$ represents the first input feature of the target network layer, $param$ represents the target feature-value quantization hyperparameter in the target network layer, $bw$ represents the target feature-value quantization bit width of the target network layer, $clip$ represents a clipping function, $round$ represents a rounding operation.

For example, a sample decoding network includes a plurality of network layers using floating-point-type weights, where the plurality of network layers include at least one target network layer of the sample decoding network, and the processing module is configured for: for each of the at least one target network layer of the sample decoding network: obtaining a weight quantization hyperparameter candidate list corresponding to the target network layer, where the weight quantization hyperparameter candidate list includes a plurality of candidate weight quantization hyperparameters; for each of the plurality of candidate weight quantization hyperparameters, performing simulated quantization on the floating-point-type weight of the target network layer by a fixed quantization bit width and the candidate weight quantization hyperparameter, to obtain a candidate simulated weight; processing a floating-point-type input feature of the target network layer based on the candidate simulated weight, to obtain a floating-point-type output feature of the target network layer, determining a quantization error corresponding to the candidate weight quantization hyperparameter based on the floating-point-type output feature of the target network layer; based on the quantization error corresponding to each of the plurality of candidate weight quantization hyperparameters, determining a candidate weight quantization hyperparameter corresponding to a minimum quantization error as a target weight quantization hyperparameter of the target network layer, and determining the fixed quantization bit width as a target weight quantization bit width of the target network layer; performing fixed-point quantization on the floating-point-type weight of the target network layer based on the target weight quantization bit width and the target weight quantization hyperparameter of the target network layer, to obtain an integer-type weight of the target network layer; and generating the target decoding network based on the integer-type weight of each of the plurality of target network layers in the sample decoding network.

For example, when obtaining the weight quantization hyperparameter candidate list corresponding to the target network layer, the processing module is configured for: determining a maximum weight value based on all floating-point-type weights of the target network layer; where each of the all floating-point-type weights includes a plurality of weight values, and the maximum weight value is a maximum value in all weight values of the all floating-point-type weights; generating an initial weight quantization hyperparameter corresponding to the target network layer based on the maximum weight value; and constructing the weight quantization hyperparameter candidate list based on the initial weight quantization hyperparameter.

For example, when generating the initial weight quantization hyperparameter corresponding to the target network layer based on the maximum weight value, the processing module is configured for: generating the initial weight quantization hyperparameter through a following formula: $param = bw - 1 - ceil(log2(max))$; or $param = (max)/2^{bw-1}$; where param represents the initial weight quantization hyperparameter corresponding to the target network layer, bw represents the fixed quantization bit width, max represents the the maximum weight value, and ceil represents a rounding up operation.

For example, when performing simulated quantization on the floating-point-type weight of the target network layer by the fixed quantization bit width and the candidate weight quantization hyperparameter to obtain the candidate simulated weight, the processing module is configured for: performing simulated quantization on the floating-point-type weight of the target network layer to obtain the candidate simulated weight, by a following formula: $quant = 2^{-param} \times clip(round(data \times 2^{param}), -2^{bw-1}, 2^{bw-1} - 1)$; or $quant = param \times clip(round(data \div param), -2^{bw-1}, 2^{bw-1} - 1)$; where *quant* represents the candidate simulated weight, *param* represents the candidate weight quantization hyperparameter, *data* represents the floating-point-type weight of the target network layer, bw represents the fixed quantization bit width, *clip* represents a clipping function, *round* represents a rounding operation.

For example, when determining the quantization error corresponding to the candidate weight quantization hyperparameter based on the floating-point-type output feature of the target network layer, the processing module is configured for: determining a sample output feature based on the floating-point-type output feature of the target network layer, where the sample output feature is an output feature of a reference network layer in the sample decoding network, and the reference network layer is any one network layer located after the target network layer; determining the quantization error corresponding to the candidate weight quantization hyperparameter based on the sample output feature and a reference output feature; where obtaining the reference output feature includes: decoding a sample feature from a sample bitstream, determining a floating-point-type input feature corresponding to the sample decoding network based on the sample feature, and determining the reference output feature based on the floating-point-type input feature, where the reference output feature is an output feature of the reference network layer in the sample decoding network.

For example, a sample decoding network includes a plurality of network layers using floating-point-type weights, where the plurality of network layers include at least one target network layer, and the processing module is configured for: for each of the at least one target network layer: obtaining a feature-value quantization hyperparameter candidate list and a quantization bit width set corresponding to the target network layer, where the feature-value quantization hyperparameter candidate list includes a plurality of candidate feature-value quantization hyperparameters, and the quantization bit width set includes at least two quantization bit widths; traversing the at least two quantization bit widths from the quantization bit width set, for each of the plurality of candidate feature-value quantization hyperparameters, performing, with the current quantization bit width and the candidate feature-value quantization hyperparameter, simulated quantization on a floating-point-type input feature of the target network layer to obtain a candidate input feature; processing the candidate input feature based on a pseudo weight of the target network layer, to obtain a floating-point-type output feature of the target network layer, determining a quantization error corresponding to the candidate feature-value quantization hyperparameter based on the floating-point-type output feature of the target network layer; and based on the quantization error corresponding to each of the plurality of candidate feature-value quantization hyperparameters under a current quantization bit width, in response to determining that a minimum quantization error is less than a preset threshold, determining a candidate feature-value quantization hyperparameter corresponding to the minimum quantization error as the target feature-value quantization hyperparameter of the target network layer, determining the current quantization bit width as the target feature-value quantization bit width of the target network layer. The processing module is further configured for: based on the quantization error corresponding to each of the plurality of candidate feature-value quantization hyperparameters under a current quantization bit width; in response to the minimum quantization error being greater than or equal to a preset threshold, determining whether the current quantization bit width is the last quantization bit width of the quantization bit width set; in response to determining that the current quantization bit width is the last quantization bit width in the quantization bit width set, determining the candidate feature-value quantization hyperparameter corresponding to the minimum quantization error as the target feature-value quantization hyperparameter of the target network layer, and determining the current quantization bit width as the target feature-value quantization bit width of the target network layer.

For example, when obtaining the feature-value quantization hyperparameter candidate list corresponding to the target network layer, the processing module is configured for: determining a maximum feature value based on all floating-point-type input features of the target network layer; where each of the all floating-point-type input features includes a plurality of feature values, and the maximum feature value is a maximum value in all feature values of the all floating-point-type input features; generating an initial feature-value quantization hyperparameter corresponding to the target network layer based on the maximum feature value; and constructing the feature-value quantization hyperparameter candidate list based on the initial feature-value quantization hyperparameter. For example, when generating the initial feature-value quantization hyperparameter corresponding to the target network layer based on the maximum feature value, the processing module is configured for: generating the initial feature-value quantization hyperparameter by a following formula: $get\_param = bw - 1 - ceil(log2(max))$; or $get\_param = (max)/2^{bw-1}$; where get_param represents the initial feature-value quantization hyperparameter corresponding to the target network layer, bw represents the current quantization bit width, max represents the maximum feature value, and ceil represents a rounding up operation.

when performing simulated quantization on a floating-point-type input feature of the target network layer by the current quantization bit width and the candidate feature-value quantization hyperparameter to obtain a candidate input feature, the processing module is configured for: performing simulated quantization on the floating-point-type input feature to obtain the candidate input feature by the following formula: $quant = 2^{-param} \times clip(round(data \times 2^{param}), -2^{bw-1}, 2^{bw-1} - 1)$; or $quant = param \times clip(round(data \div param), -2^{bw-1}, 2^{bw-1} - 1)$; where $quant = param \times clip(round(data \div param), -2^{bw-1}, 2^{bw-1} - 1)$ represents the candidate input feature, $param$ represents the candidate feature-value quantization hyperparameter, $data$ represents the floating-point-type input feature, $bw$ represents the current quantization bit width, $clip$ represents a clipping function, $round$ represents a rounding operation.

For example, the processing module is further configured for: performing simulated quantization on the floating-point-type weight of the target network layer by the target weight quantization hyperparameter of the target network layer and the target weight quantization bit width of the target network layer, to obtain the pseudo weight of the target network layer.

For example, when determining the quantization error corresponding to the candidate feature-value quantization hyperparameter based on the floating-point-type output feature of the target network layer, the processing module is configured for: determining a sample output feature based on the floating-point-type output feature of the target network layer, where the sample output feature is an output feature of a reference network layer in the sample decoding network, and the reference network layer is any one network layer located after the target network layer; determining the quantization error corresponding to the candidate feature-value quantization hyperparameter based on the sample output feature and a reference output feature; where obtaining the reference output feature includes: decoding a sample feature from a sample bitstream, determining a floating-point-type input feature corresponding to the sample decoding network based on the sample feature, and determining the reference output feature based on the floating-point-type input feature, where the reference output feature is an output feature of the reference network layer in the sample decoding network.

It should be understood by those skilled in the art that embodiments of the present disclosure can be provided as methods, systems, or computer program products. The present disclosure can take the form of an entirely hardware embodiment, an entirely software embodiment, or an embodiment combining software and hardware aspects. The present disclosure can employ the form of a computer program product implemented on one or more computer-usable storage media (including, but not limited to, disk storage, CD-ROM, optical storage, etc.), where the one or more computer-usable storage media have computer-usable program code. The above description is only embodiments of the present disclosure and is not intended to limit the present disclosure.

For those skilled in the art, various modifications and changes can be made in the present disclosure. Any modification, equivalent replacement, improvement, etc. present the spirit and principle of the present disclosure shall be included in the scope of the claims of the present disclosure.

**Claims**

1. A decoding method, comprising:

   decoding a target feature corresponding to a current picture block from a bitstream corresponding to the current picture block;
   determining a first input feature of a target decoding network based on the target feature;
   obtaining a target feature-value quantization bit width and a target feature-value quantization hyperparameter of the target decoding network, and converting the first input feature of the target decoding network into a second input feature of the target decoding network based on the target feature-value quantization bit width and the target feature-value quantization hyperparameter;
   processing the second input feature of the target decoding network based on an integer-type weight of the target decoding network to obtain an output feature of the target decoding network; wherein the integer-type weight of the target decoding network is determined based on a target weight quantization bit width and a target weight quantization hyperparameter of the target decoding network; and
   determining a reconstructed picture block corresponding to the current picture block based on the output feature of the target decoding network.

2. The method according to claim 1, wherein the target decoding network comprises at least one target network layer, wherein the at least one target network layer each adopts an integer-type weight, and the method comprises: for each of the at least one target network layer in the target decoding network,

converting a first input feature of the target network layer into a second input feature of the target network layer based on a target feature-value quantization bit width and a target feature-value quantization hyperparameter of the target network layer; and

processing the second input feature of the target network layer based on an integer-type weight of the target network layer to obtain an output feature of the target network layer; wherein the integer-type weight of the target network layer is determined based on a target weight quantization bit width and a target weight quantization hyperparameter of the target network layer;

wherein target feature-value quantization bit widths in different target network layers are same or different, target feature-value quantization hyperparameters in different target network layers are same or different, target weight quantization bit widths in different target network layers share a fixed bit width, and target weight quantization hyperparameters in different target network layers are same or different.

3. The method according to claim 2, wherein converting the first input feature of the target network layer into the second input feature of the target network layer based on the target feature-value quantization bit width and the target feature-value quantization hyperparameter of the target network layer comprises:

converting the first input feature of the target network layer into the second input feature of the target network layer through a following formula:

$$quant = clip(round(data \times 2^{param}), -2^{bw-1}, 2^{bw-1} - 1);$$

or

$$quant = clip(round(data \div param), -2^{bw-1}, 2^{bw-1} - 1);$$

wherein *quant* represents the second input feature of the target network layer,
*data* represents the first input feature of the target network layer,
*param* represents the target feature-value quantization hyperparameter in the target network layer,
*bw* represents the target feature-value quantization bit width of the target network layer,
*clip* represents a clipping function, and
*round* represents a rounding operation.

4. The method according to any one of claims 1-3, wherein a sample decoding network comprises a plurality of network layers using floating-point-type weights, wherein the plurality of network layers comprise at least one target network layer of the sample decoding network, and the method further comprises: for each of the at least one target network layer of the sample decoding network:

obtaining a weight quantization hyperparameter candidate list corresponding to the target network layer, wherein the weight quantization hyperparameter candidate list comprises a plurality of candidate weight quantization hyperparameters;
for each of the plurality of candidate weight quantization hyperparameters,

performing simulated quantization on the floating-point-type weight of the target network layer by a fixed quantization bit width and the candidate weight quantization hyperparameter, to obtain a candidate simulated weight;
processing a floating-point-type input feature of the target network layer based on the candidate simulated weight, to obtain a floating-point-type output feature of the target network layer;
determining a quantization error corresponding to the candidate weight quantization hyperparameter based on the floating-point-type output feature of the target network layer;

based on the quantization error corresponding to each of the plurality of candidate weight quantization hyperparameters, determining a candidate weight quantization hyperparameter corresponding to a minimum quantization error as a target weight quantization hyperparameter of the target network layer, and determining the fixed quantization bit width as a target weight quantization bit width of the target network layer;
performing fixed-point quantization on the floating-point-type weight of the target network layer based on the target weight quantization bit width and the target weight quantization hyperparameter of the target network layer, to obtain an integer-type weight of the target network layer; and
generating the target decoding network based on the integer-type weight of each of the plurality of target network layers in the sample decoding network.

5. The method according to claim 4, wherein obtaining the weight quantization hyperparameter candidate list corresponding to the target network layer comprises:

determining a maximum weight value based on all floating-point-type weights of the target network layer; wherein each of the all floating-point-type weights comprises a plurality of weight values, and the maximum weight value is a maximum value in all weight values of the all floating-point-type weights;
generating an initial weight quantization hyperparameter corresponding to the target network layer based on the maximum weight value; and
constructing the weight quantization hyperparameter candidate list based on the initial weight quantization hyperparameter.

6. The method according to claim 5, wherein generating the initial weight quantization hyperparameter corresponding to the target network layer based on the maximum weight value comprises:

generating the initial weight quantization hyperparameter through a following formula:

$$param = bw - 1 - ceil(log2(max));$$

or

$$param = (max)/2^{bw-1};$$

wherein param represents the initial weight quantization hyperparameter corresponding to the target network layer,
bw represents the fixed quantization bit width,
max represents the maximum weight value, and
ceil represents a rounding up operation.

7. The method according to claim 4, wherein performing simulated quantization on the floating-point-type weight of the target network layer by the fixed quantization bit width and the candidate weight quantization hyperparameter, to obtain the candidate simulated weight comprises:

performing simulated quantization on the floating-point-type weight of the target network layer to obtain the candidate simulated weight, by a following formula:

$$quant = 2^{-param} \times clip(round(data \times 2^{param}), -2^{bw-1}, 2^{bw-1} - 1);$$

or

$$quant = param \times clip(round(data \div param), -2^{bw-1}, 2^{bw-1} - 1);$$

wherein *quant* represents the candidate simulated weight,
*param* represents the candidate weight quantization hyperparameter,
*data* represents the floating-point-type weight of the target network layer,
*bw* represents the fixed quantization bit width,
*clip* represents a clipping function, and
*round* represents a rounding operation.

8. The method according to claim 4, wherein determining the quantization error corresponding to the candidate weight quantization hyperparameter based on the floating-point-type output feature of the target network layer comprises:

determining a sample output feature based on the floating-point-type output feature of the target network layer, wherein the sample output feature is an output feature of a reference network layer in the sample decoding network, and the reference network layer is any one network layer located after the target network layer; and determining the quantization error corresponding to the candidate weight quantization hyperparameter based on the sample output feature and a reference output feature;

wherein obtaining the reference output feature comprises: decoding a sample feature from a sample bitstream, determining a floating-point-type input feature corresponding to the sample decoding network based on the sample feature, and determining the reference output feature based on the floating-point-type input feature, wherein the reference output feature is an output feature of the reference network layer in the sample decoding network.

9. The method according to any one of claims 1-3, wherein a sample decoding network comprises a plurality of network layers using floating-point-type weights, wherein the plurality of network layers comprise at least one target network layer of the sample decoding network, and the method further comprises: for each of the at least one target network layer of the sample decoding network:

obtaining a feature-value quantization hyperparameter candidate list and a quantization bit width set corresponding to the target network layer, wherein the feature-value quantization hyperparameter candidate list comprises a plurality of candidate feature-value quantization hyperparameters, and the quantization bit width set comprises at least two quantization bit widths;

traversing the at least two quantization bit widths from the quantization bit width set;

for each of the plurality of candidate feature-value quantization hyperparameters,

performing simulated quantization on a floating-point-type input feature of the target network layer by a current quantization bit width and the candidate feature-value quantization hyperparameter, to obtain a candidate input feature;

processing the candidate input feature based on a pseudo weight of the target network layer, to obtain a floating-point-type output feature of the target network layer;

determining a quantization error corresponding to the candidate feature-value quantization hyperparameter based on the floating-point-type output feature of the target network layer; and

based on the quantization error corresponding to each of the plurality of candidate feature-value quantization hyperparameters under the current quantization bit width, in response to determining that a minimum quantization error is less than a preset threshold, determining a candidate feature-value quantization hyperparameter corresponding to the minimum quantization error as the target feature-value quantization hyperparameter of the target network layer, and determining the current quantization bit width as the target feature-value quantization bit width of the target network layer.

10. The method according to claim 9, further comprising:

based on the quantization error corresponding to each of the plurality of candidate feature-value quantization hyperparameters under the current quantization bit width, in response to determining that the minimum quantization error is greater than or equal to the preset threshold, determining whether the current quantization bit width is a last quantization bit width in the quantization bit width set; and

in response to determining that the current quantization bit width is the last quantization bit width in the quantization bit width set, determining the candidate feature-value quantization hyperparameter corresponding to the minimum quantization error as the target feature-value quantization hyperparameter of the target network layer, and determining the current quantization bit width as the target feature-value quantization bit width of the target network layer.

11. The method according to claim 9, wherein obtaining the feature-value quantization hyperparameter candidate list corresponding to the target network layer comprises:

determining a maximum feature value based on all floating-point-type input features of the target network layer; wherein each of the all floating-point-type input features comprises a plurality of feature values, and the maximum feature value is a maximum value in all feature values of the all floating-point-type input features;
generating an initial feature-value quantization hyperparameter corresponding to the target network layer based on the maximum feature value; and
constructing the feature-value quantization hyperparameter candidate list based on the initial feature-value quantization hyperparameter.

12. The method according to claim 11, wherein generating the initial feature-value quantization hyperparameter corresponding to the target network layer based on the maximum feature value comprises:

   generating the initial feature-value quantization hyperparameter by a following formula:

$$param = bw - 1 - ceil(log2(max));$$

   or

$$param = (max)/2^{bw-1};$$

   wherein param represents the initial feature-value quantization hyperparameter corresponding to the target network layer,
   bw represents the current quantization bit width,
   max represents the maximum feature value, and
   ceil represents a rounding up operation.

13. The method according to claim 9, wherein performing simulated quantization on the floating-point-type input feature of the target network layer by the current quantization bit width and the candidate feature-value quantization hyperparameter, to obtain the candidate input feature comprises:

   performing simulated quantization on the floating-point-type input feature of the target network layer to obtain the candidate input feature by a following formula:

$$quant = 2^{-param} \times clip(round(data \times 2^{param}), -2^{bw-1}, 2^{bw-1} - 1);$$

   or

$$quant = param \times clip(round(data \div param), -2^{bw-1}, 2^{bw-1} - 1);$$

   wherein *quant* represents the candidate input feature,
   *param* represents the candidate feature-value quantization hyperparameter,
   *data* represents the floating-point-type input feature,
   *bw* represents the current quantization bit width,
   *clip* represents a clipping function, and
   *round* represents a rounding operation.

14. The method according to claim 9, further comprising:
   performing simulated quantization on the floating-point-type weight of the target network layer by the target weight quantization hyperparameter of the target network layer and the target weight quantization bit width of the target network layer, to obtain the pseudo weight of the target network layer.

15. The method according to claim 9, wherein determining the quantization error corresponding to the candidate feature-value quantization hyperparameter based on the floating-point-type output feature of the target network layer comprises:

   determining a sample output feature based on the floating-point-type output feature of the target network layer, wherein the sample output feature is an output feature of a reference network layer in the sample decoding network, and the reference network layer is any one network layer located after the target network layer;

determining the quantization error corresponding to the candidate feature-value quantization hyperparameter based on the sample output feature and a reference output feature;

wherein obtaining the reference output feature comprises: decoding a sample feature from a sample bitstream, determining a floating-point-type input feature corresponding to the sample decoding network based on the sample feature, and determining the reference output feature based on the floating-point-type input feature, wherein the reference output feature is an output feature of the reference network layer in the sample decoding network.

**16.** A decoding apparatus, comprising:

a decoding module module, configured to decode a target feature corresponding to a current picture block from a bitstream corresponding to the current picture block;

a determining module, configured to determine a first input feature of a target decoding network based on the target feature;

a processing module, configured to obtain a target feature-value quantization bit width and a target feature-value quantization hyperparameter of the target decoding network, and convert the first input feature of the target decoding network into a second input feature of the target decoding network based on the target feature-value quantization bit width and the target feature-value quantization hyperparameter; process the second input feature of the target decoding network based on an integer-type weight of the target decoding network to obtain an output feature of the target decoding network; wherein the integer-type weight of the target decoding network is determined based on a target weight quantization bit width and a target weight quantization hyperparameter of the target decoding network; and

a determining module, configured to determine a reconstructed picture block corresponding to the current picture block based on the output feature of the target decoding network.

**17.** A decoding device, comprising: one or more processors and one or more machine-readable storage media, wherein the one or more machine-readable storage media store machine executable instructions that are executable by the one or more processors; and

the one or more processors are configured to execute the machine executable instructions to implement the method according to any one of claims 1 to 15.

**18.** A machine readable storage medium, wherein the machine readable storage medium stores computer instructions, and when the computer instructions are executed by one or more processors, the method according to any one of claims 1 to 15 is implemented.

FIG. 1

| | |
|---|---|
| Decode a target feature corresponding to a current picture block from a bitstream corresponding to the current picture block | 201 |
| Determine an input feature of a target decoding network based on the target feature | 202 |
| Obtain a target feature-value quantization bit width and a target feature-value quantization hyperparameter of the target decoding network, and convert a first input feature into a second input feature based on the target feature-value quantization bit width and the target feature-value quantization hyperparameter | 203 |
| Process the second input feature based on an integer-type weight of the target decoding network to obtain an output feature of the target decoding network; where integer-type weight is determined based on the target weight quantization bit width and the target weight quantization hyperparameter of the target decoding network | 204 |
| Determine a reconstructed picture block corresponding to the current picture block based on the output feature of the target decoding network | 205 |

FIG. 2

```
                    ┌──────────────────┐                                    ┌──────────────────┐
              x     │    Analysis      │         y                          │  Hyperparameter  │      z
          ────────▶ │  transformation  │ ─────────┬────────────────────────▶│    encoding      │────────┐
                    │     network      │          │                         │     network      │        │
                    └──────────────────┘          ⊖◀──────────────┐         └──────────────────┘        │
                                                   │              │                                     │
                                                   r│  mu         │                                     │
                                          ┌──────────────────┐    │                                     ▼
                                          │ Feature processing│   │                                ┌─────────┐
                                          └──────────────────┘    │                                │  Q &AE  │
                                                   │              │                                └─────────┘
                                          ┌──────────────┐        │         ┌──────────────────┐        │
                                          │    Q &AE     │◀───────┤         │  Mean prediction │   ┌──────────────┐
                                          └──────────────┘        │         │     network      │   │ Bitstream #1 │
                                                   │              │         └──────────────────┘   └──────────────┘
                                          ┌──────────────┐        │                  ▲                    │
                                          │ Bitstream #2 │        │                  │ z_hat          ┌────────┐
                                          └──────────────┘        │                                  │ AD &IQ │
                                                   │              │                                  └────────┘
                                          ┌──────────────┐        │                                       │
                                          │   AD &IQ     │◀───────┤                                       │
                                          └──────────────┘        │ mu                                    │
                                                   │              │                                    z_hat
                                          ┌──────────────────┐    │                                       ▼
                                          │ Feature recovery │    │         ┌──────────────────┐
                                          └──────────────────┘    │    p    │    Probability   │
                                       r_hat │                    └────────▶│  hyperparameter  │◀───
                                            ⊕◀───────────────────           │ decoding network │
                    ┌──────────────────┐    │  y_hat                        └──────────────────┘
          x_hat     │    Synthetic     │    │
          ◀──────── │  transformation  │◀───┘
                    │     network      │
                    └──────────────────┘
```

FIG. 3

40

FIG. 4

Original picture block

Analysis transformation network

Hyperparameter encoding network

x

y

z

Feature processing

Q &AE

Q &AE

Bitstream #2

Bitstream #1

AD &IQ

AD &IQ

Feature recovery

z_hat

p

Probability hyperparameter decoding network

Reconstructed picture block

x_hat

Synthetic transformation network

y_hat

FIG. 5A

EP 4 746 415 A1

42

FIG. 5B

EP 4 746 415 A1

FIG. 6A

44

FIG. 6B

EP 4 746 415 A1

FIG. 7

## INTERNATIONAL SEARCH REPORT

International application No.

**PCT/CN2024/105166**

| | |
|---|---|
| **A. CLASSIFICATION OF SUBJECT MATTER** | |
| H04N 19/91(2014.01)i | |
| According to International Patent Classification (IPC) or to both national classification and IPC | |

| |
|---|
| **B. FIELDS SEARCHED** |
| Minimum documentation searched (classification system followed by classification symbols) |
| IPC: H04N |
| Documentation searched other than minimum documentation to the extent that such documents are included in the fields searched |
| Electronic data base consulted during the international search (name of data base and, where practicable, search terms used) |
| CNABS, CNTXT, CNKI, WOTXT, EPTXT, USTXT: 解码, 译码, 图像块, 码流, 特征, 量化, 定点化, 位宽, 超参, 转换, 整型 权重, 重建, decode, block, stream, feature, transform, quantization, fixed-point, bit, parameter, weight, reconstructed |

**C. DOCUMENTS CONSIDERED TO BE RELEVANT**

| Category* | Citation of document, with indication, where appropriate, of the relevant passages | Relevant to claim No. |
|---|---|---|
| A | CN 110062246 A (HANGZHOU HIKVISION DIGITAL TECHNOLOGY CO., LTD.) 26 July 2019 (2019-07-26) entire document | 1-18 |
| A | WO 2021220008 A1 (DEEP RENDER LTD.) 04 November 2021 (2021-11-04) entire document | 1-18 |
| A | WO 2021143686 A1 (HANGZHOU HIKVISION DIGITAL TECHNOLOGY CO., LTD.) 22 July 2021 (2021-07-22) entire document | 1-18 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| **22 October 2024** | **22 October 2024** |
| Name and mailing address of the ISA/CN | Authorized officer |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

| Patent document cited in search report | | | Publication date (day/month/year) | Patent family member(s) | | | Publication date (day/month/year) |
|---|---|---|---|---|---|---|---|
| CN | 110062246 | A | 26 July 2019 | WO | 2019141193 | A1 | 25 July 2019 |
| WO | 2021220008 | A1 | 04 November 2021 | EP | 4144087 | A1 | 08 March 2023 |
| | | | | US | 2023154055 | A1 | 18 May 2023 |
| | | | | US | 2024056576 | A1 | 15 February 2024 |
| | | | | US | 12028525 | B2 | 02 July 2024 |
| | | | | US | 2023388500 | A1 | 30 November 2023 |
| | | | | US | 2023379469 | A1 | 23 November 2023 |
| | | | | US | 12015776 | B2 | 18 June 2024 |
| | | | | US | 2024007633 | A1 | 04 January 2024 |
| | | | | US | 12095994 | B2 | 17 September 2024 |
| | | | | US | 2023388502 | A1 | 30 November 2023 |
| | | | | US | 12022077 | B2 | 25 June 2024 |
| | | | | US | 2023388499 | A1 | 30 November 2023 |
| | | | | US | 12081759 | B2 | 03 September 2024 |
| | | | | US | 2023412809 | A1 | 21 December 2023 |
| | | | | US | 11985319 | B2 | 14 May 2024 |
| | | | | US | 2023388503 | A1 | 30 November 2023 |
| | | | | US | 12075053 | B2 | 27 August 2024 |
| | | | | US | 2023388501 | A1 | 30 November 2023 |
| | | | | US | 2024195971 | A1 | 13 June 2024 |
| | | | | US | 2022279183 | A1 | 01 September 2022 |
| | | | | US | 11677948 | B2 | 13 June 2023 |
| WO | 2021143686 | A1 | 22 July 2021 | None | | | |

Form PCT/ISA/210 (patent family annex) (July 2022)